# EUROPEAN PATENT APPLICATION

(11) **EP 4 821 733 A1**
(43) Date of publication of application: **14.10.2026**
(21) Application number: 24903857.1
(22) Date of filing: 28.06.2024
(51) Int. Cl.: B60K 35/22, B60K 35/60, B60K 35/55, B60K 35/81

(54) **VEHICLE DISPLAY DEVICE AND OPERATING METHOD THEREOF**

(30) Priority: 12.12.2023 KR 20230179219
(71) Applicant: LG Electronics Inc., Yeongdeungpo-gu Seoul 07336 (KR)
(72) Inventor: JEON, Byunglok, Seoul 06772 (KR); KIM, Hansoo, Seoul 06772 (KR); SON, Sanghyeun, Seoul 06772 (KR); SHIM, Inkoo, Seoul 06772 (KR); KIM, Jinhee, Seoul 06772 (KR); KIM, Byungkyu, Seoul 06772 (KR); CHUN, Sewon, Seoul 06772 (KR)
(74) Representative: Vossius & Partner Patentanwälte Rechtsanwälte mbB
(86) International application number: PCT/KR2024/009053
(87) International publication number: WO 2025/127286

(57) **Abstract**

A vehicle display device according to an embodiment of the present invention comprises: a display unit which is connected to one side of a frame formed to correspond to a driver seat and a passenger seat in a vehicle and performs screen control for a rectangular display installed in the frame; a plurality of driving units coupled to the display unit and including a first driving module configured to move the display unit in the horizontal direction of the frame and a second driving module configured such that at least a portion of the display unit is led into or withdrawn from the inner space of the frame; and a control unit controlling operation of these. Here, the control unit controls the plurality of driving units by generating at least one of a first driving signal for operating the first driving module and a second driving signal for operating the second driving module.

## Description

### Technical Field

The present disclosure relates to a vehicle display device and an operating thereof, and more particularly, to a vehicle display device and in which a display part is implemented to be movable in a plurality of different directions and an operating method thereof.

### Background Art

A vehicle is an apparatus that moves in a direction desired by a user who gets on board. A representative example is an automobile.

Meanwhile, for the convenience of the user using the vehicle, there is a trend in which various sensors, electronic apparatuses, and the like are provided. In particular, research on an advanced driver assistance system (ADAS) is being actively carried out for the user's convenience in driving. Furthermore, development of autonomous vehicles is being actively carried out.

In addition, as spending more time in the vehicle, there is a growing trend of users no longer viewing the vehicle merely as a means of transportation, but rather perceiving it as a space. Accordingly, research is being conducted to provide various infotainment environments more realistically by using a large display within the vehicle.

There is a need for all passengers in the vehicle to use the display installed for convenience in a more convenient and selective manner depending on the situation.

### Disclosure of Invention

### Technical Problem

An aspect of the present disclosure is to solve the foregoing and other problems.

According to some embodiments of the present disclosure, an aspect thereof is to provide a movable vehicle display device that allows both a driver and an occupant in a passenger seat of a vehicle to conveniently and selectively control the screen, and an operating method thereof.

In addition, according to some embodiments of the present disclosure, another aspect thereof is to provide a movable vehicle display that allows a driver and an occupant in a passenger seat of a vehicle to control movement with a simple and intuitive manipulation without changing their posture, and an operating method thereof.

In addition, according to some embodiments of the present disclosure, still another aspect thereof is to provide a vehicle display implemented to enable movement restriction for safe driving in exceptional situations, such as when careful driving of a vehicle is required, and an operating method thereof.

In addition, according to some embodiments of the present disclosure, still yet another aspect thereof is to provide a vehicle display that operates to be hidden thereinside when not in use or when the vehicle engine is turned off in consideration of the design of the vehicle, and an operating method thereof.

Additionally, according to some embodiments of the present disclosure, yet still another aspect thereof is to provide a vehicle display that can provide information to allow a user to know a movement restriction and a release of the movement restriction according to the driving state of the vehicle, and an operating method thereof.

### Solution to Problem

To this end, a vehicle display device according to an embodiment of the present disclosure is implemented so as to allow a display to move in different directions according to a drive signal.

The vehicle display device can operate so as to allow the display part to be exposed to the outside or slid into the inside based on a drive signal. In addition, the vehicle display device can operate so as to allow the display part to move between a passenger seat and a driver's seat of a vehicle based on another drive signal.

Specifically, a vehicle display device according to an embodiment of the present disclosure can include a display part connected to one side of a frame formed to correspond to a driver's seat and a passenger seat in a vehicle, and configured to perform screen control on a rectangular display installed in the frame; a plurality of drive parts coupled to the display part, the plurality of drive parts including a first drive module configured to move the display part in a horizontal direction of the frame, and a second drive module configured to allow at least a portion of the display part to be slid into or out of an internal space of the frame; and a control part that controls the plurality of drive parts by generating at least one of a first drive signal for operating the first drive module and a second drive signal for operating the second drive module.

In an embodiment, the first and second drive signals can be generated by one of a touch input, button input, gesture input, or voice command corresponding thereto.

In an embodiment, the vehicle display device can further include a communication part that communicates with a console controlling the driving of the display part to receive a signal according to a manipulation of the console. Additionally, the control part can generate the first drive signal based on a first signal according to a first manipulation of the console, and generate the second drive signal based on a second signal according to a second manipulation of the console.

In an embodiment, each of the first signal and the second signal can include direction information corresponding to a tilting direction of each manipulation on the console. Additionally, the control part can determine a driving direction of a drive module corresponding to the first drive signal or the second drive signal based on direction information included in a signal received from the console.

In an embodiment, the control part can generate a first drive signal to allow the display part to operate in a driving direction from the driver's seat toward the passenger seat based on direction information corresponding to a first tilting direction included in the first signal, and generate a first drive signal to allow the display part to operate in a driving direction from the passenger seat toward the driver's seat based on direction information corresponding to a second tilting direction included in the first signal.

In an embodiment, the control part can generate a second drive signal to allow the second drive module to operate in a direction in which the display part is exposed out of the frame based on direction information corresponding to a third tilting direction included in the second signal, and generate a second drive signal to allow the second drive module to operate in a direction in which the display part is slid into an internal space of the frame based on direction information corresponding to a fourth tilting direction included in the second signal.

In an embodiment, each of the first signal and the second signal can include distance information corresponding to a degree of tilting of each manipulation on the console. Additionally, the control part can determine a driving distance of a drive module corresponding to the first drive signal or the second drive signal based on distance information included in a signal received from the console.

In an embodiment, the control part can generate a first drive signal that operates the display part to move by a first distance in a horizontal direction based on distance information corresponding to a degree of first tilting included in the first signal, and generate a first drive signal that operates the display part to move by a second distance different from the first distance in a horizontal direction based on distance information corresponding to a degree of second tilting included in the first signal.

In an embodiment, the control part can generate a second drive signal that operates the display part to be slid into or out of an internal space of the frame by a first size based on distance information corresponding to a degree of first tilting included in the second signal, and generate a second drive signal that operates the display part to be slid into or out of an internal space of the frame by a second size different from the first size based on distance information corresponding to a degree of second tilting included in the second signal.

In an embodiment, each of the first signal and the second signal can include driving speed information corresponding to a degree of tilting of each manipulation on the console. The control part can determine a moving speed of the display part coupled to a drive module corresponding to the first drive signal or the second drive signal based on driving speed information included in a signal received from the console.

In an embodiment, the control part can operate the first drive module and the second drive module to be sequentially driven based on a time point at which each drive signal is received so as to allow the driving of one drive module to be completed and then the other drive module to be driven.

In an embodiment, the control part can control the plurality of drive modules to be respectively driven based on a time point at which a drive signal is received, and control, when it is determined that the first and second drive signals are received simultaneously, the drive modules to be driven according to a set priority order.

In an embodiment, the control part can control the drive modules respectively corresponding to the first and second drive signals to be driven simultaneously based on a determination that the first and second drive signals have been received simultaneously.

In an embodiment, the vehicle display device can further include a receiving part that receives state information detected by a sensor of a vehicle. Additionally, the control part can restrict an operation of the drive module corresponding to the first drive signal or the second drive signal based on the received state information.

In an embodiment, the received state information can relate to at least one of a driving mode of the vehicle, a driving speed, a number and risk level of detected objects, a vibration level of the vehicle, and an unexpected situation around the vehicle, wherein the control part determines whether to restrict an operation of the drive module corresponding to each drive signal based on the received state information.

In an embodiment, the control part can restrict the operation of the drive module, then determine that the restriction has been released based on the received state information, and perform an operation corresponding to the determination.

In an embodiment, the second drive module can be driven to change from one of a slid-in state in which a first region of the display part is exposed and a slid-out state in which an exposed area of the display part is gradually expanded from the first region to a second region to the other thereof based on the second drive signal.

### Advantageous Effects of Invention

According to a vehicle display device in accordance with the present disclosure and an operating method thereof, a display capable of controlling a large screen of an HDU can be implemented to move between a position corresponding to a driver's seat and a passenger seat, thereby selectively controlling the large screen with a simple and intuitive manipulation without changing the posture of a driver and an occupant in the passenger seat of a vehicle.

In addition, according to a vehicle display device in accordance with the present disclosure and an operating method thereof, a movable display can be located in a line of sight of a driver and an occupant in a passenger seat, and a console for controlling the movement of the movable display can be located such that it is convenient for the driver and the occupant to manipulate it by hand, thereby more conveniently performing various movement manipulations of the display.

In addition, according to a vehicle display device in accordance with the present disclosure and an operating method thereof, when careful driving of a vehicle is required, if a display reaches a threshold position in a specific direction, the device is implemented to recognize it and restrict movement, thereby providing safety in driving and stability in movement operation.

In addition, according to a vehicle display device in accordance with the present disclosure and an operating method thereof, when the use of a movable display is not required, it can be operated to be hidden thereinside, thereby allowing the interior design of the vehicle to be simpler and more luxurious.

### Brief Description of Drawings

FIG. 1 is a block diagram referenced to describe a display device of a vehicle related to an embodiment of the present disclosure.
FIG. 2 is a block diagram for explaining a detailed configuration of a vehicle display device according to an embodiment of the present disclosure.
FIG. 3 is a drawing showing a vehicle display device installed within a vehicle according to an embodiment of the present disclosure.
FIGS. 4A and 4B are exemplary drawings for explaining a vehicle display device moving in different directions according to an embodiment of the present disclosure.
FIG. 5 is a representative flowchart for explaining an operation method of a vehicle display device according to an embodiment of the present disclosure.
FIG. 6 is a drawing for explaining a console that controls a movement of a vehicle display device according to an embodiment of the present disclosure.
FIGS. 7A to 7D are drawings for explaining that a vehicle display device moves in different directions according to a manipulation of the console of FIG. 6.
FIG. 8 is a drawing for explaining motor control related to a movement of a vehicle display device according to an embodiment of the present disclosure.
FIG. 9 is a drawing showing a relationship between a movement of a vehicle display device and a console according to an embodiment of the present disclosure.
FIG. 10 is a flowchart for explaining a method of restricting a movement of a vehicle display device according to an embodiment of the present disclosure.
FIG. 11 is a flowchart for explaining an operation method of a vehicle display device according to the movement restriction described in FIG. 10.
FIG. 12 is a drawing showing an example of an operation according to a movement restriction and a release of the restriction of a vehicle display device according to an embodiment of the present disclosure.
FIG. 13A is a drawing showing an example of a movement indication method while a vehicle display device is moving according to an embodiment of the present disclosure.
FIG. 13B is a drawing showing an example of an indication method related to the completion of movement of a vehicle display device according to an embodiment of the present disclosure.

### Mode for the Invention

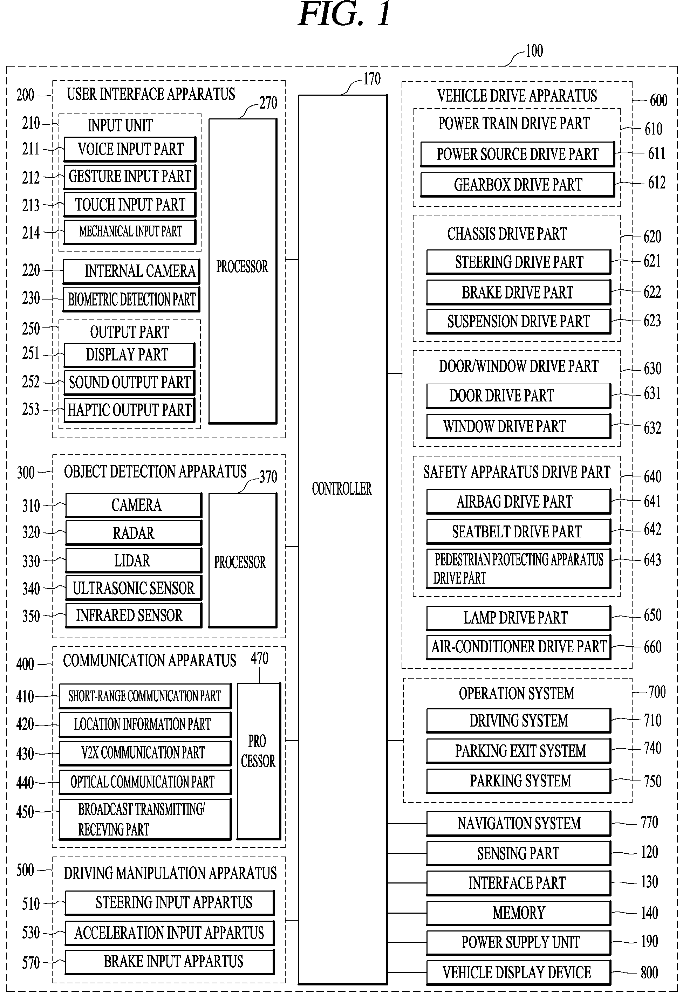

FIG. 1 is a block diagram referenced to describe a vehicle related to an embodiment of the present disclosure.

Referring to FIG. 1, a vehicle 100 can include a wheel that rotates by a power source and a steering input apparatus 510 for adjusting a direction of travel of the vehicle 100.

The vehicle 100 can be an autonomous driving vehicle. The vehicle 100 can be switched into an autonomous driving mode or a manual mode based on a user input. For example, the vehicle 100 can be converted from the manual mode into the autonomous driving mode or from the autonomous driving mode into the manual mode based on a user input received through a user interface apparatus (hereinafter, referred to as a 'user terminal') 200.

The vehicle 100 can be switched into the autonomous driving mode or the manual mode based on driving environment information. Driving situation information can be generated based on object information provided by an object detection apparatus 300. For example, the vehicle 100 can be switched from the manual mode into the autonomous driving mode or from the autonomous driving mode into the manual mode based on driving environment information generated in the object detection apparatus 300. In an example, the vehicle 100 can be switched from the manual mode into the autonomous driving mode or from the autonomous driving mode into the manual mode based on driving environment information received through a communication apparatus 400.

The vehicle 100 can be switched from the manual mode into the autonomous driving mode or from the autonomous driving mode into the manual mode based on information, data or signal provided from an external device.

When the vehicle 100 can be operated in the autonomous driving mode, the autonomous driving vehicle 100 can be operated based on an operation system 700. For example, the autonomous driving vehicle 100 can be driven based on information, data or signal generated in a driving system 710, a parking exit system 740 and a parking system 750.

When the vehicle 100 is driven in the manual mode, the autonomous driving vehicle 100 can receive a user input for driving through a driving manipulation apparatus 500. The vehicle 100 can be driven based on the user input received through the driving manipulation apparatus 500.

An overall length refers to a length from a front end to a rear end of the vehicle 100, a width refers to a width of the vehicle 100, and a height refers to a length from a bottom of a wheel to a roof. In the following description, an overall-length direction L can refer to a direction which is a criterion for measuring the overall length of the vehicle 100, a width direction W can refer to a direction that is a criterion for measuring a width of the vehicle 100, and a height direction H can refer to a direction that is a criterion for measuring a height of the vehicle 100.

As illustrated in FIG. 1, the vehicle 100 can include a user interface apparatus (hereinafter, referred to as a 'user terminal') 200, an object detection apparatus 300, a communication apparatus 400, a driving manipulation apparatus 500, a vehicle drive apparatus 600, an operation system 700, a navigation system 770, a sensing part 120, an interface part 130, a memory 140, a control part 170, and a power supply part 190.

According to embodiments, the vehicle 100 can include more components in addition to components to be explained in this specification or can not include some of those components to be explained in this specification.

The user interface apparatus 200 is an apparatus for communication between the vehicle 100 and a user. The user interface apparatus 200 can receive a user input and provide information generated in the vehicle 100 to the user. The vehicle 100 can implement a user interface (UI) or user experience (UX) through a user interface apparatus (hereinafter, referred to as a 'user terminal') 200.

The user interface apparatus 200 can include an input part 210, an internal camera 220, a biometric detection part 230, an output part 250 and a processor 270. According to embodiments, the user interface apparatus 200 can include more components in addition to components to be explained in this specification or can not include some of those components to be explained in this specification.

The input part 210 can allow the user to input information, and data collected in the input part 210 can be analyzed by the processor 270 and processed as a user's control command.

The input part 210 can be arranged within the vehicle. For example, the input part 210 can be arranged on one area of a steering wheel, one area of an instrument panel, one area of a seat, one area of each pillar, one area of a door, one area of a center console, one area of a headlining, one area of a sun visor, one area of a windshield, one area of a window, or the like.

The input part 210 can include a voice input part 211, a gesture input part 212, a touch input part 213, and a mechanical input part 214.

The audio input part 211 can convert a user's voice input into an electric signal. The converted electric signal can be provided to the processor 270 or the control part 170. The audio input part 211 can include at least one microphone.

The gesture input part 212 can convert a user's gesture input into an electric signal. The converted electric signal can be provided to the processor 270 or the control part 170.

The gesture input part 212 can include at least one of an infrared sensor and an image sensor for detecting the user's gesture input. According to an embodiment, the gesture input part 212 can detect a user's three-dimensional (3D) gesture input. To this end, the gesture input part 212 can include a light output part outputting a plurality of infrared rays or a plurality of image sensors.

The gesture input part 212 can detect the user's 3D gesture input by a time of flight (TOF) method, a structured light method or a disparity method.

The touch input part 213 can convert the user's touch input into an electric signal. The converted electric signal can be provided to the processor 270 or the control part 170.

The touch input part 213 can include a touch sensor for detecting the user's touch input. According to an embodiment, the touch input part 213 can be integrated with the display part 251 so as to implement a touch screen. The touch screen can provide an input interface and an output interface between the vehicle 100 and the user.

The mechanical input part 214 can include at least one of a button, a dome switch, a jog wheel, and a jog switch. An electric signal generated by the mechanical input part 214 can be provided to the processor 270 or the control part 170. The mechanical input part 214 can be arranged on a steering wheel, a center fascia, a center console, a cockpit module, a door and the like.

The internal camera 220 can acquire an internal image of the vehicle. The processor 270 can detect a user's state based on the internal image of the vehicle. The processor 270 can acquire information related to the user's gaze from the internal image of the vehicle. The processor 270 can detect a user gesture from the internal image of the vehicle.

The biometric detection part 230 can acquire the user's biometric information. The biometric detection part 230 can include a sensor for detecting the user's biometric information and acquire fingerprint information and heart rate information regarding the user using the sensor. The biometric information can be used for user authentication.

The output part 250 can generate an output related to a visual, auditory or tactile signal. The output part 250 can include at least one of a display part 251, a sound output part 252 and a haptic output part 253.

The display part 251 can output graphic objects corresponding to various types of information. The display part 251 can include at least one of a liquid crystal display (LCD), a thin film transistor-LCD (TFT LCD), an organic light-emitting diode (OLED), a flexible display, a three-dimensional (3D) display and an e-ink display.

The display part 251 can be inter-layered or integrated with a touch input part 213 to implement a touch screen.

The display part 251 can be implemented as a head-up display (HUD). When the display part 251 is implemented as the HUD, the display part 251 can be provided with a projecting module so as to output information through an image which is projected on a windshield or a window.

The display part 251 can include a transparent display. The transparent display can be attached to the windshield or the window. The transparent display can display a predetermined screen with a predetermined transparency. In order to achieve transparency, the transparent display can include at least one of a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display can be adjustable.

Meanwhile, the user interface apparatus 200 can include a plurality of display parts 251a to 251g.

The display part 251 can be arranged on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The sound output part 252 can convert an electric signal provided from the processor 270 or the control part 170 into an audio signal for output. To this end, the sound output part 252 can include at least one speaker.

The haptic output part 253 generates a tactile output. For example, the haptic output part 253 can vibrate a steering wheel, a safety belt, a seat 110FL, 110FR, 110RL, 110RR to allow the user to recognize such an output.

The processor (hereinafter, referred to as a 'control part') 270 can control an overall operation of each unit of the user interface apparatus 200. According to an embodiment, the user interface apparatus 200 can include a plurality of processors 270 or can not include any processor 270.

When the processor 270 is not included in the user interface apparatus 200, the user interface apparatus 200 can operate according to a control of a processor of another apparatus within the vehicle 100 or the control part 170.

Meanwhile, the user interface apparatus 200 can be called as a vehicle display device. The user interface apparatus 200 can operate according to the control of the control part 170.

The object detection apparatus 300 is an apparatus for detecting an object located at outside of the vehicle 100. The object can be a variety of objects associated with driving (operation) of the vehicle 100. The object can include an lanes, another vehicle, a pedestrian, a two-wheeled vehicle, a traffic signal, light, a road, a structure, a speed bump, a terrain feature, an animal, and the like

The road can include a road surface, a curve, an upward slope, a downward slope and the like.

The structure can be an object that is located near a road and fixed on the ground. For example, the structure can include a streetlamp, a roadside tree, a building, an electric pole, a traffic light, a bridge and the like.

The terrain feature can include a mountain, a hill and the like.

Meanwhile, objects can be classified into a moving object and a fixed object. For example, the moving object can be a concept including another vehicle and a pedestrian. The fixed object can be a concept including a traffic signal, a road and a structure.

The object detection apparatus 300 can include a camera 310, a radar 320, a lidar 330, an ultrasonic sensor 340, an infrared sensor 350 and a processor 370.

According to an embodiment, the object detection apparatus 300 can further include other components in addition to the components described, or can not include some of the components described.

The camera 310 can be located on an appropriate portion outside the vehicle to acquire an external image of the vehicle. The camera 310 can be a mono camera, a stereo camera 310a, an AVM (Around View Monitoring) camera 310b, or a 360-degree camera.

For example, the camera 310 can be arranged in the interior of the vehicle, in close proximity to a front windshield, to acquire an image on the front of the vehicle. Or, the camera 310 can be arranged adjacent to a front bumper or a radiator grill.

For example, the camera 310 can be arranged in the interior of the vehicle, in close proximity to a rear glass, to acquire an image on the rear of the vehicle. Or, the camera 310 can be arranged adjacent to a rear bumper, a trunk or a tail gate.

For example, the camera 310 can be arranged in close proximity to at least one of side windows in the interior of the vehicle to acquire an image on the side of the vehicle. Or, the camera 310 can be arranged adjacent to a side mirror, a fender or a door.

The camera 310 can provide an acquired image to the processor 370.

The radar 320 can include electric wave transmitting and receiving portions. The radar 320 can be implemented as a pulse radar or a continuous wave radar according to a principle of emitting electric waves. The radar 320 can be implemented in a frequency modulated continuous wave (FMCW) manner or a frequency shift keying (FSK) manner according to a signal waveform, among the continuous wave radar methods.

The radar 320 can detect an object in a time of flight (TOF) manner or a phase-shift manner through the medium of electromagnetic waves, and detect a position of the detected object, a distance from the detected object and a relative speed with the detected object.

The radar 320 can be arranged on an appropriate position outside the vehicle for detecting an object which is located on the front, rear or side of the vehicle.

The lidar 330 can include laser transmitting and receiving portions. The lidar 330 can be implemented in a time of flight (TOF) manner or a phase-shift manner.

The lidar 330 can be implemented as a drive type or a non-drive type.

For the drive type, the lidar 330 can be rotated by a motor and detect object near the vehicle 100.

For the non-drive type, the lidar 330 can detect, through light steering, objects which are located within a predetermined range based on the vehicle 100. The vehicle 100 can include a plurality of non-drive type lidars 330.

The lidar 330 can detect an object in a time of flight (TOF) manner or a phase-shift manner through the medium of laser light, and detect a position of the detected object, a distance from the detected object and a relative speed with the detected object.

The lidar 330 can be arranged on an appropriate position outside the vehicle for detecting an object located on the front, rear or side of the vehicle.

The ultrasonic sensor 340 can include ultrasonic wave transmitting and receiving portions. The ultrasonic sensor 340 can detect an object based on an ultrasonic wave, and detect a position of the detected object, a distance from the detected object and a relative speed with the detected object.

The ultrasonic sensor 340 can be arranged on an appropriate position outside the vehicle for detecting an object located on the front, rear or side of the vehicle.

The infrared sensor 350 can include infrared light transmitting and receiving portions. The infrared sensor 340 can detect an object based on infrared light, and detect a position of the detected object, a distance from the detected object and a relative speed with the detected object.

The infrared sensor 350 can be arranged on an appropriate position outside the vehicle for detecting an object located on the front, rear or side of the vehicle.

The processor 370 can control an overall operation of each unit of the object detection apparatus 300.

The processor 370 can detect an object based on an acquired image, and track the object. The processor 370 can execute operations, such as a calculation of a distance from the object, a calculation of a relative speed with the object and the like, through an image processing algorithm.

The processor 370 can detect an object based on a reflected electromagnetic wave which an emitted electromagnetic wave is reflected from the object, and track the object. The processor 370 can execute operations, such as a calculation of a distance from the object, a calculation of a relative speed with the object and the like, based on the electromagnetic wave.

The processor 370 can detect an object based on a reflected laser beam which an emitted laser beam is reflected from the object, and track the object. The processor 370 can execute operations, such as a calculation of a distance from the object, a calculation of a relative speed with the object and the like, based on the laser beam.

The processor 370 can detect an object based on a reflected ultrasonic wave which an emitted ultrasonic wave is reflected from the object, and track the object. The processor 370 can execute operations, such as a calculation of a distance from the object, a calculation of a relative speed with the object and the like, based on the ultrasonic wave.

The processor 370 can detect an object based on reflected infrared light which emitted infrared light is reflected from the object, and track the object. The processor 370 can execute operations, such as a calculation of a distance from the object, a calculation of a relative speed with the object and the like, based on the infrared light.

According to an embodiment, the object detection apparatus 300 can include a plurality of processors 370 or can not include any processor 370. For example, each of the camera 310, the radar 320, the lidar 330, the ultrasonic sensor 340 and the infrared sensor 350 can include the processor in an individual manner.

When the processor 370 is not included in the object detection apparatus 300, the object detection apparatus 300 can operate according to the control of a processor of an apparatus within the vehicle 100 or the control part 170.

The object detection apparatus 300 can operate according to the control of the control part 170.

The communication apparatus 400 is an apparatus for performing communication with an external device. Here, the external device can be another vehicle, a mobile terminal or a server.

The communication apparatus 400 can perform the communication by including at least one of a transmitting antenna, a receiving antenna, and radio frequency (RF) circuit and RF device for implementing various communication protocols.

The communication apparatus 400 can include a short-range communication part 410, a location information part 420, a V2X communication part 430, an optical communication part 440, a broadcast transmitting/receiving part 450 and a processor 470.

According to an embodiment, the communication apparatus 400 can further include other components in addition to the components described, or can not include some of the components described.

The short-range communication part 410 is a unit for facilitating short-range communications. The short-range communication part 410 can support short-range communication using at least one of Bluetooth^{TM}, Radio Frequency Identification (RFID), Infrared Data Association (IrDA), Ultra Wideband (UWB), ZigBee, Near field communication (NFC), Wireless-Fidelity (Wi-Fi), Wi-Fi Direct, Wireless Universal Serial Bus (Wireless USB), and the like.

The short-range communication part 410 can construct short-range area networks to perform short-range communication between the vehicle 100 and at least one external device.

The location information part 420 is a unit for acquiring position information. For example, the location information part 420 can include a Global Positioning System (GPS) module or a Differential Global Positioning System (DGPS) module.

The V2X communication part 430 is a unit for performing wireless communications with a server (vehicle to infrastructure; V2I), another vehicle (vehicle to vehicle; V2V), or a pedestrian (vehicle to pedestrian; V2P). The V2X communication part 430 can include an RF circuit capable of implementing a communication protocol with an infrastructure (V2I), a communication protocol between vehicles (V2V) and a communication protocol with a pedestrian (V2P).

The optical communication part 440 is a unit for performing communication with an external device through the medium of light. The optical communication part 440 can include a light-emitting diode for converting an electric signal into an optical signal and sending the optical signal to the exterior, and a photodiode for converting the received optical signal into an electric signal.

According to an embodiment, the optical transmission part can be formed integrally with lamps provided on the vehicle 100.

The broadcast transmitting/receiving part 450 is a unit for receiving a broadcast signal from an external broadcast managing entity or transmitting a broadcast signal to the broadcast managing entity via a broadcast channel. The broadcast channel can include a satellite channel, a terrestrial channel, or both. The broadcast signal can include a TV broadcast signal, a radio broadcast signal and a data broadcast signal.

The processor 470 can control an overall operation of each unit of the communication apparatus 400.

According to an embodiment, the communication apparatus 400 can include a plurality of processors 470 or can not include any processor 470.

When the processor 470 is not included in the communication apparatus 400, the communication apparatus 400 can operate according to the control of a processor of another apparatus within the vehicle 100 or the control part 170.

Meanwhile, the communication apparatus 400 can implement a vehicle display device together with the user interface apparatus 200. In this instance, the display device for the vehicle can be referred to as a telematics device or an Audio Video Navigation (AVN) device.

The communication apparatus 400 can operate according to the control of the control part 170.

The driving manipulation apparatus 500 is an apparatus for receiving a user input for driving.

In a manual mode, the vehicle 100 can be operated based on a signal provided by the driving manipulation apparatus 500.

The driving manipulation apparatus 500 can include a steering input apparatus 510, an acceleration input apparatus 530 and a brake input apparatus 570.

The steering input apparatus 510 can receive an input regarding a driving (ongoing) direction of the vehicle 100 from the user. The steering input apparatus 510 is preferably configured in the form of a wheel allowing a steering input in a rotating manner. According to an embodiment, the steering input apparatus can also be configured in a shape of a touch screen, a touchpad, or a button.

The acceleration input apparatus 530 can receive an input for accelerating the vehicle 100 from the user. The brake input apparatus 570 can receive an input for braking the vehicle 100 from the user. Each of the acceleration input apparatus 530 and the brake input apparatus 570 is preferably configured in the form of a pedal. According to an embodiment, the acceleration input apparatus or the brake input apparatus can also be configured in the form of a touch screen, a touch pad or a button.

The driving manipulation apparatus 500 can operate according to the control of the control part 170.

The vehicle drive apparatus 600 is an apparatus for electrically controlling the driving of various apparatuses within the vehicle 100.

The vehicle drive apparatus 600 can include a power train drive part 610, a chassis drive part 620, a door/window drive part 630, a safety apparatus drive part 640, a lamp drive part 650, and an air-conditioner drive part 660.

According to an embodiment, the vehicle drive apparatus 600 can further include other components in addition to the components described, or can not include some of the components described.

Meanwhile, the vehicle drive apparatus 600 can include a processor. Each unit of the vehicle drive apparatus 600 can individually include a processor.

The power train drive part 610 can control an operation of a power train apparatus.

The power train drive part 610 can include a power source drive part 611 and a gearbox drive part 612.

The power source drive part 611 can perform a control for a power source of the vehicle 100.

For example, upon using a fossil fuel-based engine as the power source, the power source drive part 611 can perform an electronic control for the engine. Accordingly, an output torque and the like of the engine can be controlled. The power source drive part 611 can adjust the engine output torque according to the control of the control part 170.

For example, upon using an electric energy-based motor as the power source, the power source drive part 611 can perform a control for the motor. The power source drive part 611 can adjust a rotating speed, a torque and the like of the motor according to the control of the control part 170.

The gearbox drive part 612 can perform a control for a gearbox. The gearbox drive part 612 can adjust a state of the gearbox. The gearbox drive part 612 can change the state of the gearbox into drive (forward) (D), reverse (R), neutral (N) or parking (P).

Meanwhile, when an engine is the power source, the gearbox drive part 612 can adjust a locked state of a gear in the drive (D) state.

The chassis drive part 620 can control an operation of a chassis apparatus. The chassis drive part 620 can include a steering drive part 621, a brake drive part 622 and a suspension drive part 623.

The steering drive part 621 can perform an electronic control for a steering apparatus within the vehicle 100. The steering drive part 621 can change a driving direction of the vehicle.

The brake drive part 622 can perform an electronic control for a brake apparatus within the vehicle 100. For example, the brake drive part 622 can control an operation of brakes provided at wheels to reduce speed of the vehicle 100.

Meanwhile, the brake drive part 622 can individually control each of a plurality of brakes. The brake drive part 622 can differently control braking force applied to each of a plurality of wheels.

The suspension drive part 623 can perform an electronic control for a suspension apparatus within the vehicle 100. For example, the suspension drive part 623 can control the suspension apparatus to reduce vibration of the vehicle 100 when a bump is present on a road. Meanwhile, the suspension drive part 623 can individually control each of a plurality of suspensions.

The door/window drive part 630 can perform an electronic control for a door apparatus or a window apparatus within the vehicle 100.

The door/window drive part 630 can include a door drive part 631 and a window drive part 632.

The door drive part 631 can perform the control for the door apparatus. The door drive part 631 can control opening or closing of a plurality of doors of the vehicle 100. The door drive part 631 can control opening or closing of a trunk or a tail gate. The door drive part 631 can control opening or closing of a sunroof.

The window drive part 632 can perform the electronic control for the window apparatus. The window drive part 632 can control opening or closing of a plurality of windows of the vehicle 100.

The safety apparatus drive part 640 can perform an electronic control for various safety apparatuses within the vehicle 100.

The safety apparatus drive part 640 can include an airbag drive part 641, a seatbelt drive part 642 and a pedestrian protecting apparatus drive part 643.

The airbag drive part 641 can perform an electronic control for an airbag apparatus within the vehicle 100. For example, the airbag drive part 641 can control the airbag to be deployed upon a detection of a risk.

The seatbelt drive part 642 can perform an electronic control for a seatbelt apparatus within the vehicle 100. For example, the seatbelt drive part 642 can control passengers to be motionlessly seated in seats 110FL, 110FR, 110RL, 110RR using seatbelts upon a detection of a risk.

The pedestrian protecting apparatus drive part 643 can perform an electronic control for a hood lift and a pedestrian airbag. For example, the pedestrian protecting apparatus drive part 643 can control the hood lift and the pedestrian airbag to be open up upon detecting pedestrian collision.

The lamp drive part 650 can perform an electronic control for various lamp apparatuses within the vehicle 100.

The air-conditioner drive part 660 can perform an electronic control for an air conditioner within the vehicle 100. For example, the air-conditioner drive part 660 can control the air conditioner to supply cold air into the vehicle when internal temperature of the vehicle is high.

The vehicle drive apparatus 600 can include a processor. Each unit of the vehicle drive apparatus 600 can individually include a processor.

The vehicle drive apparatus 600 can operate according to the control of the control part 170.

The operation system 700 is a system that controls various driving modes of the vehicle 100. The operation system 700 can be operated in the autonomous driving mode.

The operation system 700 can include a driving system 710, a parking exit system 740 and a parking system 750.

According to an embodiment, the operation system 700 can further include other components in addition to the components described, or can not include some of the components described.

Meanwhile, the operation system 700 can include a processor. Each unit of the operation system 700 can individually include a processor.

According to an embodiment, the operation system 700 can be a sub concept of the control part 170 when it is implemented in a software configuration.

Meanwhile, according to an embodiment, the operation system 700 can be a concept including at least one of the user interface apparatus 200, the object detection apparatus 300, the communication apparatus 400, the vehicle drive apparatus 600, and the control part 170.

The driving system 710 can perform driving of the vehicle 100.

The driving system 710 can receive navigation information from a navigation system 770, transmit a control signal to the vehicle drive apparatus 600, and perform driving of the vehicle 100. The driving system 710 can receive object information from the object detection apparatus 300, transmit a control signal to the vehicle drive apparatus 600 and perform driving of the vehicle 100. The driving system 710 can receive a signal from an external device through the communication apparatus 400, transmit a control signal to the vehicle drive apparatus 600, and perform the driving of the vehicle 100.

The parking exit system 740 can perform an exit of the vehicle 100 from a parking lot.

The parking exit system 740 can receive navigation information from the navigation system 770, transmit a control signal to the vehicle drive apparatus 600, and perform the exit of the vehicle 100 from the parking lot. The parking exit system 740 can receive object information from the object detection apparatus 300, transmit a control signal to the vehicle drive apparatus 600 and perform the exit of the vehicle 100 from the parking lot. The parking exit system 740 can receive a signal from an external device through the communication apparatus 400, transmit a control signal to the vehicle drive apparatus 600, and perform the exit of the vehicle 100 from the parking lot.

The parking system 750 can perform parking of the vehicle 100.

The parking system 750 can receive navigation information from the navigation system 770, transmit a control signal to the vehicle drive apparatus 600, and park the vehicle 100. The parking system 750 can receive object information from the object detection apparatus 300, transmit a control signal to the vehicle drive apparatus 600 and park the vehicle 100. The parking system 750 can receive a signal from an external device through the communication apparatus 400, transmit a control signal to the vehicle drive apparatus 600, and park the vehicle 100.

The navigation system 770 can provide navigation information. The navigation information can include at least one of map information, information regarding a set destination, path information according to the set destination, information regarding various objects on a path, lane information and current location information of the vehicle.

The navigation system 770 can include a memory and a processor. The memory can store the navigation information. The processor can control an operation of the navigation system 770.

According to an embodiment, the navigation system 770 can update previously stored information by receiving information from an external apparatus through the communication apparatus 400.

According to an embodiment, the navigation system 770 can be classified as a sub component of the user interface apparatus 200.

The sensing part 120 can sense a status of the vehicle. The sensing part 120 can include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing part 120 can acquire sensing signals with respect to vehicle-related information, such as a pose, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing part 120 can further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface part 130 can serve as a path allowing the vehicle 100 to interface with various types of external devices connected thereto. For example, the vehicle interface part 130 can be provided with a port connectable with a mobile terminal, and connected to the mobile terminal through the port. In this instance, the interface part 130 can exchange data with the mobile terminal.

Meanwhile, the vehicle interface part 130 can serve as a path for supplying electric energy to the connected mobile terminal. When the mobile terminal is electrically connected to the vehicle interface part 130, the vehicle interface part 130 supplies electric energy supplied from a power supply part 190 to the mobile terminal according to the control of the control part 170.

The memory 140 is electrically connected to the control part 170. The memory 140 can store basic data for units, control data for controlling operations of units and input/output data. The memory 140 can be various storage apparatuses such as a ROM, a RAM, an EPROM, a flash drive, a hard drive, and the like in terms of hardware. The memory 140 can store various data for overall operations of the vehicle 100, such as programs for processing or controlling the control part 170.

According to an embodiment, the memory 140 can be integrated with the control part 170 or implemented as a sub component of the control part 170.

The control part 170 can control an overall operation of each unit of the vehicle 100. The control part 170 can be referred to as an Electronic Control Unit (ECU).

The power supply part 190 can supply power for an operation of each component according to the control of the control part 170. Specifically, the power supply part 190 can receive power supplied from an internal battery of the vehicle, and the like.

At least one processor and the control part 170 included in the vehicle 100 can be implemented using at least one of application specific integrated circuits (ASICs), digital signal processors (DSPs), digital signal processing devices (DSPDs), programmable logic devices (PLDs), field programmable gate arrays (FPGAs), processors, control parts, micro control parts, microprocessors, and electric units performing other functions.

Meanwhile, in embodiments of the present disclosure, a 'driver', 'occupant', 'driver or occupant (driver/occupant)' refers to a driver, passenger, co-passenger, occupant, or the like who is on board a vehicle capable of autonomous driving according to an embodiment of the present disclosure, and can be one or more.

Additionally, in embodiments of the present disclosure, the term 'vehicle' is used to refer to a vehicle capable of performing autonomous driving by artificial intelligence (AI) or a vehicle capable of receiving such services. In addition, in embodiments of the present disclosure, the 'vehicle' can be freely switched between manual driving, fully autonomous driving, and semi-autonomous driving by a driver.

In embodiments of the present disclosure, a 'vehicle display device', which is a display device arranged in a front seat of the vehicle 100, can be formed to be movable in different directions.

The vehicle display device can be used to refer to a movable center information display (CID), include both a movable CID and a head unit display (HUD), or include a movable CID, a HUD, and a manipulation unit related to the movement of the CID.

The vehicle display device can be formed so as to allow a display to move in different directions.

The vehicle display device includes a display for displaying various screens, and can control a screen displayed on the HUD through that display. Additionally, the vehicle display device can be implemented so as to allow the CID to be movable to control the screen displayed on the HUD.

The vehicle display device can generate a signal for moving the CID according to the manipulation of a manipulation unit installed at another location in the vehicle.

The vehicle display device can be activated or deactivated as it moves in different directions from a front seat of the vehicle, and can be used as a flexible controller that can be used by an occupant in the driver's seat or controlled by an occupant in the passenger seat.

Additionally, the vehicle display device can operate to switch a screen of the HUD as moving in different directions from the front seat of the vehicle.

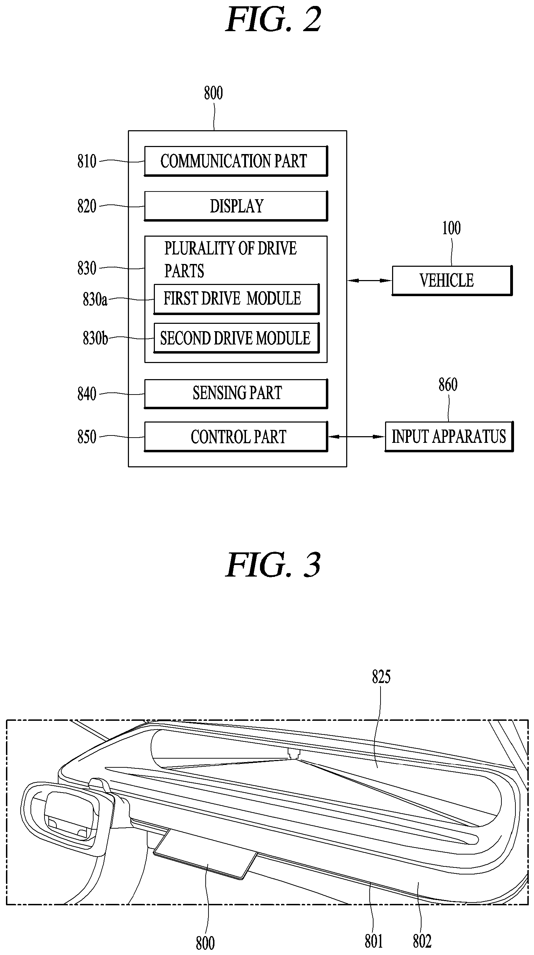

FIG. 2 is a block diagram for explaining a vehicle display device 800 related to an embodiment of the present disclosure.

In FIG. 2, the vehicle display device 800 can communicate with the components of the vehicle 100 and can be installed, for example, in a front seat inside the vehicle 100.

The vehicle display device 800 of FIG. 2 can include a communication part 810, a display part 820, a plurality of drive parts 830, a sensing part 830, and a control part 850. Additionally, the vehicle display device 800 can be understood to include an input apparatus 860 installed at another position in the vehicle 100. In this case, the vehicle display device 800 can receive a signal generated according to the manipulation of the input apparatus 860 and can perform an operation based on the received signal.

Additionally, although not shown, the vehicle display device 800 can include a second display that is controlled through an input/manipulation to the display part 820. The second display can be named a rectangular display mounted on a frame. When the second display (or rectangular display) is included as a component of the vehicle display device 800, a screen displayed on the second display can be controlled through the display part 820.

The communication part 810 can receive sensing values and/or control values from various apparatuses/systems such as the vehicle 100 and/or various sensors in the vehicle 100, an advanced driver assistance system (ADAS), a driver monitoring system (ADAS), and the like.

As an example, the communication part 810 can receive a drive signal for operating the plurality of drive parts 830 from the input apparatus 860 separately installed in the vehicle 100 as the control value. As another example, the communication part 810 can receive a sensing value as the above sensing value for operating or limiting the operation of the plurality of drive parts 830 in relation to driving safety.

The display part 820 is formed to display a screen and to be movable in different directions.

Specifically, the display part 820 can move between the driver's seat and the passenger seat of the vehicle 100 (a first direction of movement), or move to be slid into or exposed to the outside with respect to the provided frame (a second direction of movement). In this case, the movement in the first and second directions of movement is performed independently of each other.

The plurality of drive parts 830 can include a first drive module 830a and a second drive module 830 that operate to allow the display part 820 of the vehicle display device 800 to move in different directions.

The first drive module 830a and the second drive module 830b each operate independently according to different drive signals. Each of the first drive module 830a and the second drive module 830b provides a driving force to the display part 820 to move the display part 820 in different directions. To this end, the first drive module 830a and the second drive module 830b can each include a motor.

According to an embodiment, the first drive module 830a operates to move the display part 820 in a first direction. According to an embodiment, the second drive module 830b operates to move the display part 820 in a second direction different from the first direction.

Here, the first direction can be a direction of movement in which the display part 820 moves in a transverse direction (left-right direction), and the second direction can be a direction of movement in which the display part 820 moves in an up-down direction (longitudinal direction). Alternatively, the first direction can be a direction of movement in which the display part 820 moves between the driver's seat (or center) and the passenger seat of the vehicle, and the second direction can be a direction of movement in which the display part 820 moves to be slid into an internal space of the frame or exposed to the outside from the internal space.

The first drive module 830a can include a drive motor (hereinafter, referred to as a 'first drive motor') that drives the display part 820 to move in a transverse direction (left-right direction). Specifically, the first drive motor is driven by a control signal from the control part 850 that receives a first drive signal to move a movable frame included in the first drive module 830a in a transverse direction (left-right direction), thereby allowing the display part 820 mounted on the movable frame to move in a first direction.

The second drive module 830b can include a drive motor (hereinafter, referred to as a 'second drive motor') that drives the display part 820 to move in an up-down direction (longitudinal direction). Specifically, the second drive motor is driven by a control signal from the control part 850 that receives a second drive signal to move a movable frame included in the second drive module 830b in an up-down direction (longitudinal direction), thereby allowing the display part 820 mounted on the movable frame to moves in a second direction.

The first drive motor and the second drive motor can be arranged in different directions to provide driving forces for moving the display part 820 in different directions, respectively. For example, the first drive motor and the second drive motor can be arranged in directions orthogonal to each other.

Additionally, at least one of the first drive motor and the second drive motor is arranged in the same frame as the display part 820 so as to move together with the display part 820 as the frame moves.

Meanwhile, the control part 850 can control the first drive motor to generate a rotational force in different directions based on detailed direction information included in the first drive signal.

For example, by controlling the first drive motor to rotate in a first rotational direction, the display part 820 can be moved from the driver's seat (or center) toward the passenger seat. Additionally, for example, by controlling the first drive motor to rotate in a second rotational direction, the display part 820 can be moved from the passenger seat toward the driver's seat (or center).

Additionally, the control part 850 can control the second drive motor to generate a rotational force in different directions based on detailed direction information included in the second drive signal.

For example, by controlling the first drive motor to rotate in a first rotational direction, the display part 820 can be moved from the driver's seat (or center) toward the passenger seat. Additionally, for example, by controlling the first drive motor to rotate in a second rotational direction, the display part 820 can be moved from the passenger seat toward the driver's seat (or center).

The sensing part 830 can detect an input to the vehicle display device 800. Additionally, the sensing part 830 can detect a movement of the display part 820 according to the operation of the plurality of drive parts 830.

Additionally, the sensing part 830 can detect a distance of movement and a relative position of the display part 820 according to the driving of the first drive module 830a. Additionally, the sensing part 830 can detect a distance of movement and a relative position of the display part 820 according to the driving of the second drive module 830b.

The sensing part 830 can transmit a sensing value detected according to the operation of the plurality of drive parts 830 to the control part 850 to determine a distance of movement and a relative position of the display part 820.

Additionally, the sensing part 830 can detect whether the distance of movement and relative position of the display part 820 have reached a preset threshold distance and threshold position to transmit it to the control part 850.

When the display part 820 reaches the threshold distance and threshold position, the control part 850 can recognize that the display part 820 can no longer move in a direction exceeding the threshold distance and threshold position. Accordingly, upon receiving a drive signal for moving in a direction exceeding the threshold distance and threshold position, the control part 850 can control to perform an operation according to the movement restriction.

The control part 850 controls an overall operation of the vehicle display device 800. The control part 850 can communicate with the vehicle 100 to receive the sensing information and state information of the vehicle 100, and can transmit information regarding the state and operation of the vehicle display device 800 to the vehicle 100.

The control part 850 can generate a drive signal to drive the plurality of drive parts 830 for the movement of the display part 820. The control part 850 can generate a first drive signal to operate the first drive module 830a so as to allow the display part 820 to move in a first direction. Additionally, the control part 850 can generate a second drive signal to operate the second drive module 830b so as to allow the display part 820 to move in a second direction different from the first direction.

The control part 850 can control a screen displayed on the display part 820.

The control part 850 can control the operation of each of the plurality of drive parts 830 based on the first drive signal and/or second drive signal received through the communication part 810. Specifically, the control part 850 controls the driving of the first drive module 830a based on the first drive signal and controls the driving of the second drive module 830b based on the second drive signal.

The control part 850 controls the first drive module 830a to operate based on the first drive signal, thereby allowing the display part 820 to move in the first direction. In this case, the first direction includes detailed direction information. Based on detailed direction information of the first direction, the control part 850 controls the operation of the first drive module 830a so as to allow the display part 820 to move from the driver's seat (or center) to the passenger seat or from the passenger seat to the driver's seat (or center) of the vehicle 100.

Additionally, the control part 850 controls the first drive module 830b to operate based on the second drive signal, thereby allowing the display part 820 to move in the second direction. In this case, the second direction includes detailed direction information. Based on detailed direction information of the second direction, the control part 850 controls the operation of the second drive module 830b so as to allow the display part 820 to move to be exposed from an internal space of the frame of the vehicle 100 to the outside or to be slid into the internal space of the frame.

The input apparatus 860 can be implemented to receive a user manipulation for moving the display part 820. The input apparatus 860 can be installed at a position of the vehicle 100 different from that of the vehicle display device 800.

For example, the input apparatus 860 can be mounted so as to be parallel between the driver's seat and the passenger seat, and arranged so as to be spaced vertically apart from the vehicle display device 800. Additionally, for example, the input apparatus 860 can be mounted in a position that is convenient for occupants in the driver's seat and passenger seat to operate by hand without changing their posture.

Herein, the input apparatus 860 can also be named a 'console', 'console display', or 'input unit'. The input apparatus 860 can be used as an input apparatus to control a movement of the vehicle display device 800.

In an embodiment, the input apparatus 860 can be implemented as a separate apparatus from the vehicle display device 800. In this case, the input apparatus 860 and the vehicle display device 800 can perform wired/wireless communication so as to allow the vehicle display device 800 to move in different directions depending on the manipulation of the input apparatus 860.

The manipulation of the input apparatus 860 can be performed to match a manipulation method corresponding to the direction of movement so as to intuitively control the direction of movement of the vehicle display device 800. For example, the manipulation of the input apparatus 860 can be a tilting manipulation in a direction in which the vehicle display device 800 is to be moved.

The input apparatus 860 can communicate with the vehicle display device 800 through a communication module (not shown). A signal generated by the manipulation of the input apparatus 860 can be received by the communication part 810 of the vehicle display device 800 through a communication module (not shown).

Specifically, a signal corresponding to a user manipulation applied through the input apparatus 860 can be converted into a drive signal through the control part 850 and transmitted to the plurality of drive parts 830. Based on different manipulations applied to the input apparatus 860, different drive modules of the plurality of drive parts 830 can be operated.

For example, when a first signal generated according to a first manipulation on the input apparatus 860 is transmitted to the vehicle display device 800, the control part 850 can transmit a first drive signal corresponding to the received first signal to the first drive module 830a to control the display part 820 to move in a first direction.

Here, the first manipulation can include different direction information, for example, one of a direction corresponding to the driver's seat (center) and a direction corresponding to the passenger seat. Additionally, the first direction can be one of a plurality of directions in which the display part 820 moves between the driver's seat (center) and the passenger seat.

Additionally, for example, when a second signal generated according to a second manipulation on the input apparatus 860 is transmitted to the vehicle display device 800, the control part 850 can transmit a second drive signal corresponding to the received second signal to the second drive module 830b to control the display part 820 to move in a second direction.

Here, the second manipulation can include different direction information, for example, one of a direction corresponding to a dashboard of the vehicle and a direction corresponding to a rear seat of the vehicle. Additionally, the second direction can be one of a plurality of directions in which the display part 820 moves to be slid into or out of an internal space of the frame in which the components of the vehicle display device 800 are embedded.

FIG. 3 is a drawing showing the vehicle display device 800 according to an embodiment of the present disclosure installed in the vehicle 100.

As illustrated in FIG. 3, the vehicle display device 800 is formed to include a display part connected to one side of a frame 802 formed to correspond to the driver's seat (or center) and the passenger seat in the vehicle 100, and configured to perform screen control for a rectangular display 825 installed in the frame.

In FIG. 3, the frame 802 is formed to correspond to a cluster, and can be formed to extend from the driver's seat to the passenger seat of the vehicle 100. Additionally, the rectangular display 825 can be installed on the front of the frame 802.

A cabin can be formed inside the frame 802, and a slot 801 can be formed horizontally at a bottom of the frame 802. The vehicle display device 800 can move left and right along the slot 801 according to the drive signal. Additionally, the vehicle display device 800 can be slid into the slot 801 or slid out of the slot 801 according to another drive signal.

At least some components of the vehicle display device 800 can be located in an interior cabin of the frame 802. For example, in the interior cabin of the frame 802, a drive module for moving the vehicle display device 800 in different directions and a portion of the frame including the same can be arranged. The drive module and the frame can move in different directions in the interior cabin of the frame 802 as the vehicle display device 800 moves in different directions.

The vehicle display device 800 can include a center information display (CID). In this specification, the center information display (CID) can be named a display part 820.

The vehicle display device 800 can be located between the driver's seat (or center) and the passenger seat, and can be formed to move between the passenger seat and the driver's seat according to a drive signal. Specifically, the vehicle display device 800 can move left and right along the slot 801 formed on one side of the frame, for example, at the bottom of the frame.

Additionally, the vehicle display device 800 can move to be slid into the slot 801 of the frame 802 or exposed out of the slot 801 from the internal space of the frame 802 based on another drive signal.

The internal space of the frame 802 can contain components of the vehicle display device 800 described above with reference to FIG. 2.

For example, each drive motor constituting the plurality of drive parts 830 that provide driving forces for moving the vehicle display device 800 in different directions, and a fixed/movable frame, and the like, can be located in the internal space of the frame 802.

Additionally, for example, the control part, that is, the processor 850, for controlling the movement and screen of the vehicle display device 800 can be provided in the internal space of the frame 802. Here, the processor 850 can include, for example, a single system on a chip (SoC) including a hypervisor, a CPU (data processing unit), an RT core, an AP core, an NPU, a GPU, and the like, and a micro controller unit (MCU). Additionally, the processor 830 can operate in conjunction with software for one or more AI learning models.

In an embodiment, the processor 850 can not only control the movement and screen of the vehicle display device 800, but also generate a screen control signal for the rectangular display 825 according to the movement and/or manipulation of the vehicle display device 800.

For example, the processor 850 can control a screen displayed on the rectangular display 825 to be different depending on whether the vehicle display device 800 is moved to the driver's seat (or center) and to the passenger seat.

In an initial state, the vehicle display device 800 can be slid into the interior cabin of the frame 802 at a position corresponding to the driver's seat (or center).

In an embodiment, when the vehicle 100 is turned on, the vehicle display device 800 can move in a direction that is gradually exposed outward from the slot 801 of the frame 802. Along with or sequentially with the operation, the screen of the display part 820 of the vehicle display device 800 can be turned on. In this case, it can be said that an ignition-on operation of the vehicle 100 generates the second drive signal.

While the vehicle 100 is driving, the vehicle display device 800 can move along the slot 801 in a transverse direction of the frame 802 based on the received first drive signal. Additionally, the vehicle display device 800 can move in a longitudinal direction (up-down direction) to be slid into the internal space of the slot 801 based on the received second drive signal.

In this case, the first drive signal and the second drive signal can each be generated according to a preset input method, for example, a designated gesture input, a voice command, a touch input to the display part 820, and different manipulations to the input apparatus 860.

In an embodiment, when the vehicle 100 is detected to be turned off or enter parking mode, the vehicle display device 800 can return to a set initial state. For example, when the vehicle display device 800 is exposed to the outside of the slot 801, it can be moved to be slid into the internal space of the slot 801. Additionally, when the vehicle display device 800 is moved to the passenger seat, it can be moved to a position corresponding to the driver's seat (or center). Along with or sequentially with the operation, the screen of the display part 820 of the vehicle display device 800 can be turned off. In this case, it can be said that an ignition-off operation of the vehicle 100 generates a first drive signal and/or the second drive signal according to a current position of the vehicle display device 800.

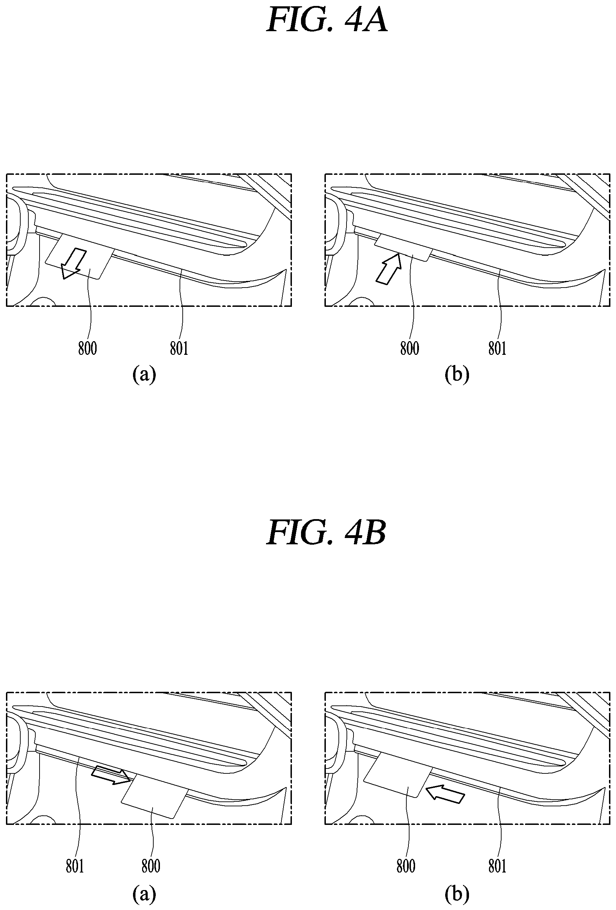

FIGS. 4A and 4B are exemplary drawings for explaining the vehicle display device 800 moving in different directions according to an embodiment of the present disclosure.

Specifically, FIG. 4A is an example of the vehicle display device 800 moving in a direction (hereinafter, referred to as a 'second direction of movement') of being slid into the internal space of the slot 801 of the frame or slid out of the slot 801.

Furthermore, FIG. 4B is an example in which the vehicle display device 800 moves along a transverse direction of the slot 801 between the driver's seat (or center) and the passenger seat (hereinafter, referred to as a 'first direction of movement').

First, describingFIG. 4B, the vehicle display device 800 moves along the slot 801 in a first direction of movement in response to the operation of the first drive module according to the received first drive signal.

Here, the first direction of movement includes the vehicle display device 800 moving from the driver's seat (or center) to the passenger seat, and from the passenger seat to the driver's seat (or center).

For example, inFIG. 4B, the vehicle display device 800 can move from the center (or driver's seat) of the vehicle 100 toward the passenger seat based on a first drive signal (a). Additionally, for example, inFIG. 4B, the vehicle display device 800 can move from the passenger seat of the vehicle 100 toward the center (or driver's seat) based on the first drive signal (b).

Meanwhile, FIG. 4B illustrates embodiments in which the vehicle display device 800 moves in a first direction of movement while exposed to the outside from the slot 801, but the vehicle display device 800 can move in a first direction of movement while being slid into the slot 801.

In this case, the vehicle display device 800 can be moved while being exposed to the outside of the slot 801 so as to allow a portion of the vehicle display device 800 to be recognized from the outside as moving in the first direction of movement. Alternatively, while the vehicle display device 800 is slid into the slot 801 to move in the first direction of movement, an LED (not shown) provided around the slot 801 can be illuminated along the direction of movement. Alternatively, while the vehicle display device 800 is slid into the slot 801 to move in the first direction of movement, an indication of movement can be displayed at a bottom of the rectangular display 825 (FIG. 3).

Subsequently, referring to FIG. 4A, the vehicle display device 800 moves in a second direction of movement in response to operating the second drive module according to the received second drive signal.

Here, the second direction of movement includes a direction of movement in which the vehicle display device 800 is slid into the internal space of the slot 801 and a direction of movement in which it is slid out of the slot 801 and exposed to the outside.

For example, inFIG. 4A,, the vehicle display device 800 can move from the center (or driver's seat) of the vehicle 100 to the passenger seat in the internal space of the slot 801 based on the second drive signal (a). Additionally, for example, in FIG. 4B, the vehicle display device 800 can move from the passenger seat of the vehicle 100 toward the center (or driver's seat) based on the first drive signal (b).

In an embodiment, the vehicle display device 800 ofFIG. 4A, can control the driving of the second drive module to change from one of a slid-in state in which only a first region of the display part 820 (FIG. 2) is exposed to the outside of the slot 801, and a slid-out state in which the exposed area is gradually expanded from the first region to a second region to the other thereof according to the second drive signal.

According to the second drive signal, the vehicle display device 800 can be exposed to the outside of the slot 801 or slid into the slot 801 while a partial region thereof is flexibly bent.

According to the second drive signal, when the vehicle display device 800 is exposed to the outside of the slot 801, a screen of the vehicle display device 800 can be turned on at that time point. Then, when the vehicle display device 800 is slid into the slot 801 according to the second drive signal, the screen of the vehicle display device 800 can be turned off at that time point.

Meanwhile,FIG. 4A, illustrates embodiments in which the vehicle display device 800 is exposed to the outside from the slot 801 or slid thereinto at a position corresponding to the driver's seat (or center), but the vehicle display device 800 can also move in a second direction of movement in which it is exposed to the outside from the slot 801 or slid thereinto at a position corresponding to the 'passenger seat'.

In an embodiment, the vehicle display device 800 moves independently in a first direction of movement or moves in a second direction of movement.

For example, the vehicle display device 800 can move sequentially in a first direction of movement and/or a second direction of movement based on time points at which the first drive signal and the second drive signal are received. Additionally, for example, when the vehicle display device 800 receives the first drive signal and the second drive signal simultaneously, it can move in one direction according to a preset reference and then subsequently move in the other direction.

Additionally, for example, when the first drive signal and the second drive signal are received simultaneously, the vehicle display device 800 can move simultaneously in a direction corresponding to each. As an example, when the first and second drive signals are received simultaneously, the vehicle display device 800 can simultaneously perform an operation of being slid into or out of the slot 801 while moving between the driver's seat (or center) and the passenger seat.

In this way, the vehicle display device 800 can move in different directions simultaneously because drive modules for moving in different directions are separately provided.

As shown inFIG. 4B, a driving force of the first drive motor included in the first drive module is provided to the first drive module to move the vehicle display device 800 in the first direction of movement. Additionally, separately therefrom, as shown inFIG. 4A,, a driving force of the second drive motor included in the second drive module is provided to the second drive module to move the vehicle display device 80 in the second direction of movement.

The vehicle display device 800 receives a first drive signal as a control signal that generates a driving force for the first drive motor. Additionally, the vehicle display device 800 receives a second drive signal as a control signal that generates a driving force for the second drive motor.

Here, the first drive signal and the second drive signal can be generated by various methods. For example, a drive signal matching each can be generated based on at least one method among a gesture input, a voice command, a touch input, a button input on a display of the vehicle display device 800, and a manipulation on the manipulation unit 860.

To this end, data for a drive signal that matches each input can be stored in advance in a memory (not shown) of the vehicle display device 800.

In an embodiment, when the drive module corresponding to the generated drive signal operates, a direction of movement of the vehicle display device 800 according to the operation of the drive module can be displayed on a display part of the vehicle display device 800.

For example, while the vehicle display device 800 moves from the driver's seat (or center) toward the passenger seat according to the first drive signal, an indication (e.g., a rightward arrow image) showing the corresponding direction of movement can be displayed on the display part 820 (FIG. 2).

Alternatively, for example, while the vehicle display device 800 is slid out from the inside of the slot 801 of the frame toward the outside according to the second drive signal, an indication (e.g., a downward arrow image) showing the corresponding direction of movement can be displayed at a bottom of the rectangular display (825, FIG. 3) mounted on the frame.

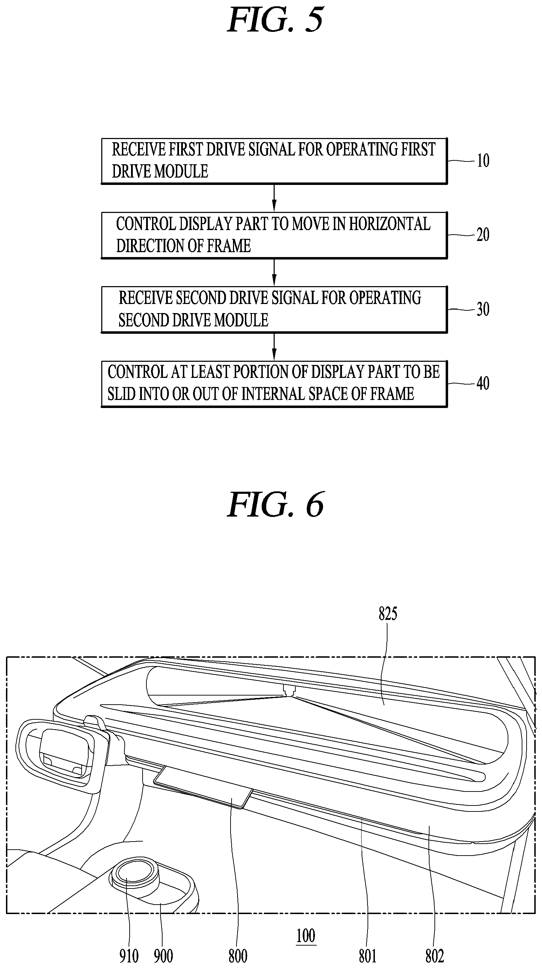

FIG. 5 is a representative flowchart for explaining an operation method of a vehicle display device according to an embodiment of the present disclosure. Each operation of the vehicle display device 800 illustrated in FIG. 5 is assumed to be performed through the control part 850 of the vehicle display device 800 unless otherwise described.

Referring to FIG. 5, the vehicle display device 800 can receive a first drive signal for operating a first drive module (10).

Here, the first drive signal can be generated, for example, based on a first manipulation on the input apparatus 860. Specifically, a signal generated according to a first manipulation on the input apparatus 860 is received by the control part 850 through the communication part 810, and the control part 850 transmits a first drive signal corresponding to the received signal to the first drive module 830a so as to allow the first drive motor in conjunction therewith to be driven.

Accordingly, the display part 820 of the vehicle display device 800 moves along a horizontal direction of the frame (20).

Here, the meaning of moving, by the display part 820, along a horizontal direction of the frame refers to moving from the driver's seat (or center) to a position corresponding to the passenger seat, or moving from the passenger seat to a position corresponding to the driver's seat (or center).

In an embodiment, the first drive signal includes detailed direction information. The control part 850 can determine whether the display part 820 moves from the driver's seat (or center) to a position corresponding to the passenger seat or from the passenger seat to a position corresponding to the driver's seat (or center) based on detailed direction information included in the first drive signal. A driving direction of the first drive motor in conjunction with the first drive module 830a is determined differently according to the determined detailed direction information.

Additionally, in an embodiment, the first drive signal can include information on at least one of a degree of movement (or distance of movement) and a speed of movement of the display part 820.

For example, the control part 850 can control the first drive module 830a to move the display part 820 based on information on a degree of movement (or distance of movement) of the display part 820 included in the first drive signal. Meanwhile, when the movement of the display part 820 is completed, a relative position of the display part 820 that has been moved can be detected through a sensor (not shown) of the frame on which the display part 820 is mounted.

Subsequently, the vehicle display device 800 can receive a second drive signal to operate the second drive module (30).

Here, the second drive signal can be generated, for example, based on a second manipulation on the input apparatus 860. Specifically, a signal generated according to a second manipulation on the input apparatus 860 is received by the control part 850 through the communication part 810, and the control part 850 transmits a second drive signal corresponding to the received signal to the second drive module 830b so as to allow the second drive motor in conjunction therewith to be driven.

Accordingly, the vehicle display device 800 has at least a portion of the display part 820 slid into or out of the internal space of the frame (40).

Here, sliding, by the display part 820, into or out of the internal space of the frame refers to moving, by the display part 820, from an initial state of being located in the internal space of the frame, to be slid out in a direction that gradually expands outward through a slot formed in the frame, or to be slid into the internal space of the frame gradually through the slit.

In the embodiment, the second drive signal includes detailed direction information. The control part 850 can determine whether the display part 820 moves in a direction that is slid into the internal space of the frame or in a direction that is slid out of the frame based on detailed direction information included in the second drive signal. A driving direction of the second drive motor in conjunction with the second drive module 830b is determined differently according to the determined detailed direction information.

Additionally, in an embodiment, the second drive signal can include information on at least one of a degree of movement (or distance of movement) and a speed of movement of the display part 820.

For example, the control part 850 can control the second drive module 830b to move the display part 820 based on information on a degree of movement (or distance of movement) of the display part 820 included in the second drive signal. Meanwhile, when the movement of the display part 820 is completed, a relative position of the display part 820 that has been moved can be detected through a sensor (not shown) of the frame on which the display part 820 is mounted.

FIG. 6 is a drawing for explaining a console 900 that controls the movement of the vehicle display device 800 according to an embodiment of the present disclosure. As used herein, the console refers to a manipulation part or input apparatus for manipulating the operation of the vehicle display device 800.

In one embodiment, the console 900 as shown in FIG. 6 can be understood as the same apparatus as the input apparatus 860 of FIG. 2. In this case, the console 900 can be understood to be integral with the vehicle display device 800.

Additionally, in another embodiment, the console 900 can be understood as a separate input apparatus distinct from the vehicle display device 800. In this case, the console 900 can be wired/wireless connected so as to allow the vehicle display device 800 to communicate in an on state.

The console 900 can be located between the driver's seat and the passenger seat of the vehicle 100, as shown in FIG. 6. Accordingly, both a driver in the driver's seat and an occupant in the passenger seat can easily manipulate the console 900 without changing their posture.

The console 900 can include a manipulation unit 910 formed to be movable and/or tiltable in the frame. Additionally, although not shown, the console 900 can include a sensor for detecting a movement and/or tilting of the manipulation unit 910. Additionally, the console 900 can include a processor (not shown) and a communication module (not shown) for generating a signal corresponding to a detected sensing value and transmitting it to the vehicle display device 800.

Depending on a direction of movement of the manipulation unit 910, different signals can be transmitted from the console 900 to the vehicle display device 800.

For example, as the manipulation unit 910 moves in a direction from the driver's seat (or center) toward the passenger seat, a first drive signal for moving the vehicle display device 800 from the driver's seat (or center) toward the passenger seat can be generated. Then, the vehicle display device 800 moves toward the passenger seat along a transverse direction of the slot 801 of the frame 802 based on the first drive signal.

Additionally, for example, as the manipulation unit 910 moves from the passenger seat to the driver's seat (or center), a first drive signal for moving the vehicle display device 800 from the passenger seat to the driver's seat (or center) can be generated. Then, the vehicle display device 800 moves toward the driver's seat (or center) along the transverse direction of the slot 801 of the frame 802 based on the first drive signal.

Depending on a tilting direction of the manipulation unit 910, different signals can be transmitted from the console 900 to the vehicle display device 800.

For example, as the manipulation unit 910 is tilted downward (or toward the rear seat of the vehicle 100), a second drive signal for allowing the vehicle display device 800 to be slid out through the slot 801 from the internal space of the frame 802 can be generated. Then, the vehicle display device 800 is gradually slid out through the slot 801 of the frame 802 based on the second drive signal.

Additionally, for example, as the manipulation unit 910 is tilted upward (or toward a front seat HUD of the vehicle 100), a second drive signal for moving the vehicle display device 800 to be slid into the internal space of the frame 802 can be generated. Then, the vehicle display device 800 is gradually slid into the internal space of the frame 802 through the slot 801 of the frame 802 based on the second drive signal.

The vehicle display device 800 can receive a signal according to a manipulation of the console 900 from the console 900 through the communication part 810.

Specifically, the vehicle display device 800 generates a first drive signal based on a first signal according to a first manipulation of the console 900, and controls the operation of the first drive module 830a based on the generated first drive signal, thereby allowing the vehicle display device 800 to move in a first direction of movement.

Here, the first signal according to the first manipulation of the console 900 is a signal that triggers the vehicle display device 800 to move in a transverse direction along the slot 801 with respect to the frame 802. Additionally, the generated first drive signal triggers the operation of the first drive module 830a so as to allow the vehicle display device 800 to move in a transverse direction along the slot 801. Accordingly, the vehicle display device 800 performs a movement operation in a first direction of movement, moving between the driver's seat (or center) and the passenger seat.

The vehicle display device 800 generates a second drive signal based on a second signal according to a second manipulation of the console 900, and controls the operation of the second drive module 830b based on the generated second drive signal, thereby allowing the vehicle display device 800 to move in a second direction of movement.

Here, the second signal according to the second manipulation of the console 900 is a signal that triggers the vehicle display device 800 to be slide out of the slot 801 with respect to the frame 802 or to be slid into the internal space along the slot 801 (i.e., to move in a longitudinal direction). Additionally, the generated second drive signal triggers the operation of the second drive module 830b so as to allow the vehicle display device 800 to be slid into or out of the internal space of the slot 801. Accordingly, the vehicle display device 800 performs a movement operation in a second direction of movement that moves to be slid out of the slot 802 or slid into the internal space of the slot 802.

In an embodiment, the vehicle display device 800 can include a second display 825 mounted thereon in a rectangular shape in the frame 820. In this case, at least a portion of the screen displayed on the second display 825 can perform screen control based on the movement of the vehicle display device 800.

For example, based on the vehicle display device 800 moving in a first direction of movement, at least a portion of the screen of the second display 825 can be switched from a screen related to vehicle driving to a screen for the passenger seat, or vice versa.

Additionally, for example, based on the vehicle display device 800 moving in a second direction of movement, at least a portion of the screen of the second display 825 can be switched to a screen corresponding to an active or inactive state of the vehicle display device 800.

Meanwhile, as described above, the first drive signal and the second drive signal for moving the vehicle display device 800 in different directions can be generated through various input methods. Hereinafter, a specific method of controlling the movement of the vehicle display device 800 by generating a first drive signal and a second drive signal based on the manipulation of a console will be described.

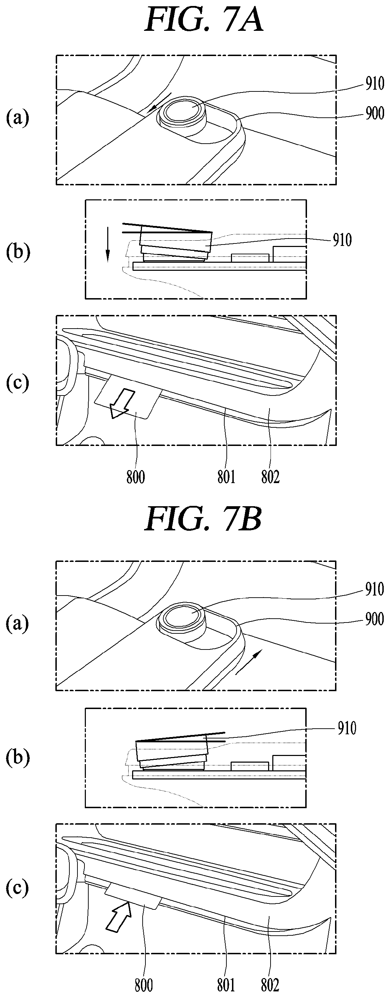

FIGS. 7A to 7D are drawings for specifically explaining that the vehicle display device 800 moves in different directions according to a manipulation of the console 900 of FIG. 6.

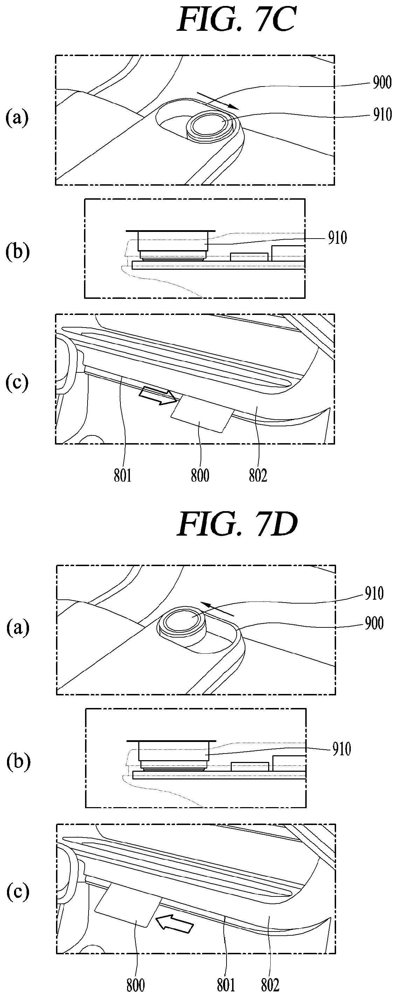

Specifically, FIGS. 7C and 7D are examples of generating a first drive signal for the vehicle display device 800 to move in a first direction of movement based on a first signal according to a first manipulation of the console 900. Here, moving the vehicle display device 800 in the first direction of movement refers to moving between the driver's seat (or center) and the passenger seat of the vehicle 100.

Furthermore, FIGS. 7A and 7B are examples of generating a first drive signal for a vehicle display device 800 to move in a second direction of movement based on a second signal according to a second manipulation of the console 900. Here, moving the vehicle display device 800 in the second direction of movement refers to moving the vehicle display device 800 so as to be hidden into the internal space of the frame where it is located or exposed to the outside from the internal space.

The console 900 can be used as a manipulation unit or input device to control the movement of the vehicle display device 800 as shown in FIGS. 7A to 7D.

When the vehicle display device 800 is in an active state, the console 900 can be connected to communicate therewith to receive a signal corresponding to an input to the manipulation unit 910 of the console 900. The vehicle display device 800 operates at least one of a plurality of drive parts 830 based on the received signal to allow the vehicle display device 800 to move in a direction that matches the input.

When the vehicle display device 800 is in an inactive state, the console 900 can be disconnected from the vehicle display device 800, and switched to a state in which a signal corresponding to an input to the manipulation unit 910 of the console 900 cannot be received.

The console 900 includes the manipulation unit 910 formed to be movable in left-right and up-down directions or tiltable in a fixed frame as shown in FIGS. 7A to 7D.

In an embodiment, the fixed frame can have an elongated oval shape in a horizontal direction. On the other hand, the manipulation unit 910 located in the fixed frame can have a circular shape. Specifically, a horizontal length of the fixed frame can be formed to be longer than the manipulation unit 910 so as to allow the manipulation unit 910 to move in a horizontal direction. On the other hand, a vertical length of the fixed frame can be formed to a length similar to that of the manipulation unit 910 so as to allow the manipulation unit 910 to only tilt in a vertical direction.

The manipulation unit 910 can be named a 'movable frame' in that it is formed to be movable relative to the fixed frame. Additionally, the manipulation unit 910 can be named a 'controller' in that it is a module formed to be tiltable through a user input. Hereinafter, it will be stated in advance that the manipulation unit 910, the movable frame, and the controller can all be used interchangeably with the same meaning.

From now on, a specific method of generating a first drive signal to move the vehicle display device 800 based on a first signal according to a first manipulation on the console 900 will be described with reference to FIG. 7C and FIG. 7D.

Referring to FIG. 7C and FIG. 7D, the console 900 located between the driver's seat and the passenger seat in the vehicle 100 can detect a first manipulation in which the manipulation unit 910 in a fixed frame moves to the left/right or tilts, and generate a first signal according to the first manipulation.

Specifically, referring to FIG. 7C, the movable frame 910 of the console 900 can be initially moved to a position corresponding to the passenger seat from a state of being fixed in a position corresponding to the driver's seat (or center) in the fixed frame.

Based on the movable frame 910 being moved to a position corresponding to the passenger seat through the user input (a), a sensor (not shown) provided in the console 900 can detect a change in position of the movable frame 910. In this case, the movable frame 910 is not tilted in an up-down direction and maintains a horizontal state (b). Accordingly, the sensor of the console 900 generates a first tilting signal that matches the movement of the movable frame 910 that moves/tilts only in a right direction. The generated first tilting signal is transmitted to the vehicle display device 800 through the communication module. When the first tilting signal is transmitted to the control part 850 via the communication part 810 of the vehicle display device 800, a first drive signal corresponding to the first tilting signal is generated. The control part 850 transmits the generated first drive signal to the first drive module 830a. In this case, the first drive signal corresponding to the first tilting signal includes detailed direction information, and accordingly, a driving direction of the motor of the first drive module 830a is determined. According to the operation of the first drive module 830a, the vehicle display device 800 moves horizontally toward the passenger seat along the slot 801 of the frame 802 (c).

Referring to FIG. 7D, the movable frame 910 of the console 900 can be moved to a position corresponding to the driver's seat (or center) from a state of being fixed in a position corresponding to the passenger seat in the fixed frame.

Based on the movable frame 910 being moved to a position corresponding to the driver's seat (or center) through a user manipulation (a), a sensor (not shown) provided in the console 900 can detect a change in position of the movable frame 910. In this case, the movable frame 910 is not tilted in an up-down direction and maintains a horizontal state (b). Accordingly, the sensor of the console 900 generates a second tilting signal that matches the movement of the movable frame 910 that moves/tilts only in a left direction. The generated second tilting signal is transmitted to the vehicle display device 800 through the communication module. When the second tilting signal is transmitted to the control part 850 via the communication part 810 of the vehicle display device 800, a first drive signal corresponding to the second tilting signal is generated. The control part 850 transmits the generated first drive signal to the first drive module 830a. In this case, the first drive signal corresponding to the second tilting signal includes detailed direction information, and accordingly, a driving direction of the motor of the first drive module 830a is determined. According to the operation of the first drive module 830a, the vehicle display device 800 moves horizontally toward the driver's seat (or center) along the slot 801 of the frame 802 (c).

Subsequently, a specific method of generating a second drive signal to move the vehicle display device 800 based on a second signal according to a second manipulation on the console 900 will be described with reference to FIGS. 7A and 7B.

Referring to FIGS. 7A and 7B, the console 900 located between the driver's seat and the passenger seat in the vehicle 100 can detect a second manipulation in which an upper/lower part of the manipulation unit 910 in a fixed frame is tilted, and generate a second signal according to the detected second manipulation.

Specifically, referring to FIG. 7A, a lower part of the movable frame 910 can be tilted while the movable frame 910 of the console 900 is fixed in a position corresponding to the driver's seat (or center) or passenger seat in the fixed frame.

Based on the lower part of the movable frame 910 being tilted through such a user manipulation (a), a sensor (not shown) provided in the console 900 can detect a change in position of the movable frame 910. In this case, the movable frame 910 does not move in a left-right direction, and the lower part of the movable frame 910 is tilted in a vertical direction (b). As the lower part of the movable frame 910 is tilted, a change in angle (e.g., 10 degrees or more) can be detected through a sensor (not shown) of the movable frame 910. The console 900 generates a third tilting signal that matches the movement of the tilted movable frame 910 in this manner. The generated third tilting signal is transmitted to the vehicle display device 800 through the communication module. When the third tilting signal is transmitted to the control part 850 via the communication part 810 of the vehicle display device 800, a second drive signal corresponding to the third tilting signal is generated. The control part 850 transmits the generated second drive signal to the second drive module 830b. In this case, the second drive signal corresponding to the third tilting signal includes detailed direction information, and accordingly, a driving direction of the motor of the second drive module 830b is determined. According to the operation of the second drive module 830b, the vehicle display device 800 is slid out of the internal space of the frame 802 toward the outside along the slot 801 of the vehicle frame 802 (c).

Referring to FIG. 7B, an upper part of the movable frame 910 can be tilted while the movable frame 910 of the console 900 is fixed in a position corresponding to the driver's seat (or center) or passenger seat in the fixed frame.

Based on the upper part of the movable frame 910 being tilted through such a user manipulation (a), a sensor (not shown) provided in the console 900 can detect a change in position of the movable frame 910. In this case, the movable frame 910 does not move in a left-right direction, and only the upper part of the movable frame 910 is tilted in a vertical direction (b). As the upper part of the movable frame 910 is tilted, a change in angle (e.g., 10 degrees or more) can be detected through a sensor (not shown) of the movable frame 910. The console 900 can generate a fourth tilting signal that matches the movement of the tilted movable frame 910 in this manner. The generated fourth tilting signal is transmitted to the vehicle display device 800 through the communication module. When the fourth tilting signal is transmitted to the control part 850 via the communication part 810 of the vehicle display device 800, a second drive signal corresponding to the fourth tilting signal is generated. The control part 850 transmits the generated second drive signal to the second drive module 830b. In this case, the second drive signal corresponding to the fourth tilting signal includes detailed direction information, and accordingly, a driving direction of the motor of the second drive module 830b is determined. According to the operation of the second drive module 830b, the vehicle display device 800 is gradually slid into the internal space of the frame 802 through the slot 801 of the vehicle frame 802 (c).

Meanwhile, when it is unclear whether the upper part of the movable frame 910 is tilted or the lower part thereof is tilted, the console 900 can generate a third tilting signal or a fourth tilting signal based on an angle difference of the movable frame 910 according to the tilting.

For example, if a change in angle of the lower part of the movable frame 910 of the console 900 is greater, a third tilting signal for the vehicle display device 800 to be slid out of the frame 802 can be generated. Additionally, for example, when a change in angle of the upper part of the movable frame 910 of the console 900 is greater, a fourth tilting signal for the vehicle display device 800 to be slid into the internal space of the frame 802 can be generated.

In this way, the first drive signal and the second drive signal by the vehicle display device 800 are determined according to a direction of movement/tilting applied to the movable frame 910 or controller of the console 900.

The vehicle display device 800 determines a driving direction of the first drive module 830a corresponding to the first drive signal and/or a driving direction of the second drive module 830b corresponding to the second drive signal based on each tilting direction information according to the manipulation of the console 900.

In an embodiment, the control part 850 of the vehicle display device 800 can generate a first drive signal in which the display part 820 of the vehicle display device 800 operates in a driving direction from the driver's seat toward the passenger seat, based on direction information corresponding to a first tilting direction included in the first signal according to the first manipulation of the console 900. That is, as described above with reference to FIG. 7C, the vehicle display device 800 can be controlled to move toward the passenger seat based on a first tilting signal generated from the console 900.

Additionally, in an embodiment, the control part 850 of the vehicle display device 800 can generate a first drive signal in which the display part 820 of the vehicle display device 800 operates in a direction of movement from the passenger seat toward the driver's seat based on direction information corresponding to a second tilting direction included in the first signal according to the first manipulation of the console 900. That is, as described above with reference to FFIG. 7D, the vehicle display device 800 can be controlled to move toward the driver's seat (or center) based on a second tilting signal generated from the console 900.

In an embodiment, the control part 850 of the vehicle display device 800 can generate a second drive signal that operates the display part 820 of the vehicle display device 800 in a direction in which it is slid out of the internal space of the frame 802, based on direction information corresponding to a third tilting direction included in the second signal according to the second manipulation of the console 900. That is, as described above with reference to FIG. 7A, the vehicle display device 800 can be controlled to gradually move in a direction exposed out of the internal space of the frame 802 based on a third tilting signal generated from the console 900.

Additionally, in an embodiment, the control part 850 of the vehicle display device 800 can generate a second drive signal that operates in a direction in which the display part 820 of the vehicle display device 800 is gradually slid into the internal space of the frame 802, based on direction information corresponding to a fourth tilting direction included in the second signal according to the second manipulation of the console 900. That is, as described above with reference to FIG. 7B, the vehicle display device 800 can be controlled to move gradually in a direction of being slid into the internal space of the frame 802 based on a fourth tilting signal generated from the console 900.

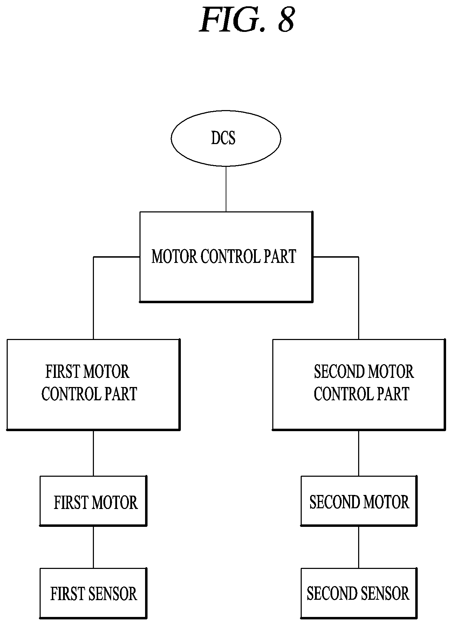

FIG. 8 is a drawing for explaining motor control related to a movement of the vehicle display device 800 in relation to embodiments described above with reference to FIG. 7A to 7D.

In FIG. 8, a DCS can be a server for communicating to allow the operation of the vehicle display device 800 to operate in conjunction with other devices in the vehicle 100. The DCS provides communication for the vehicle 100 and the vehicle display device 800 to operate in conjunction with each other, or for the vehicle display device 800 to operate in conjunction with another display device 800 in the vehicle's rear seat.

In FIG. 8, a motor control part can control each operation of a plurality of drive parts 830 to move the vehicle display device 800 in different directions. Additionally, the motor control part of FIG. 8 can be used with the same meaning as the control part 850 of the vehicle display device 800.

In FIG. 8, a first motor control part can control an operation of the first drive module 830a of the plurality of drive parts 830. Additionally, the first motor control part can control a first motor in conjunction with the first drive module 830a. In an embodiment, the first drive module 830a can be understood to include the first motor in conjunction therewith and a first motor control part (or first motor controller) for controlling the first motor.

In FIG. 8, the second motor control part can control the operation of the second drive module 830b among the plurality of drive parts 830. Additionally, the second motor control part can control a second motor in conjunction with the second drive module 830b. In an embodiment, the second drive module 830b can be understood to include the second motor in conjunction therewith and the second motor control part (or second motor controller) for controlling the second motor.

Additionally, in FIG. 8, the first sensor can detect the driving of the first motor and/or a resultant degree of horizontal movement of the vehicle display device 800. Additionally, the second sensor can detect the driving of the second motor and/or a resultant degree of vertical movement of the vehicle display device 800.

Meanwhile, each signal according to the first manipulation and/or second manipulation of the console 900 can include a degree of movement, that is, movement distance information, of the display part 820, depending on a degree of tilting of each manipulation on the console 900.

Here, the degree of tilting of each manipulation can include at least one of an intensity of tilting (tilting angle and tilting pressure), a degree of movement, and a tilting holding time period applied to the manipulation unit 910 of the console 900.

Additionally, the movement distance information refers to a degree of movement of the vehicle display device 800 that matches each drive signal. For example, the movement distance information can include a distance a which the vehicle display device 800 has moved in a horizontal direction according to the first drive signal. Additionally, the movement distance information can include a distance at which the vehicle display device 800 has moved in a vertical direction according to the second drive signal.

The control part 850 of the vehicle display device 800 can determine a driving distance of the drive module (830a or 830b) corresponding to the first drive signal or the second drive signal based on distance information included in the signal (e.g., one of the first to fourth tilting signals) received from the console 900. Based on the determined driving distance of the drive module 830a or 830b, a distance of movement (degree of movement) of the display part 820 changes.

In an embodiment, the control part 850 of the vehicle display device 800 can generate a first drive signal to operate the display part 820 of the vehicle display device 800 to move by a first distance in a horizontal direction based on distance information corresponding to a degree of first tilting included in a first signal by the console 900. In this case, the vehicle display device 800 can detect that the display part 820 has moved by a first distance through the first sensor.

Additionally, in an embodiment, the control part 850 of the vehicle display device 800 can generate a first drive signal to operate the display part 820 of the vehicle display device 800 to move by a second distance different from the first distance in a horizontal direction, based on distance information corresponding to a degree of second tilting included in the first signal by the console 900. In this case, the vehicle display device 800 can detect that the display part 820 has moved by a second distance through the first sensor.

Additionally, in an embodiment, the control part 850 of the vehicle display device 800 can generate a second drive signal based on distance information corresponding to the degree of first tilting included in the second signal from the console 900, such that the display part 820 of the vehicle display device 800 operates to be slid into or out of the internal space of the frame 802 in a vertical direction, that is, by a first size. In this case, the vehicle display device 800 can detect that the display part 820 has moved by a first distance through the second sensor.

Additionally, in an embodiment, the control part 850 of the vehicle display device 800 can generate a second drive signal based on distance information corresponding to the degree of second tilting included in the second signal from the console 900, such that the display part 820 of the vehicle display device 800 is slid into or out of the internal space of the frame 802 by a second size different from the first size. In this case, the vehicle display apparatus 800 can detect that the display part 820 has moved by a second distance through the second sensor.

In an embodiment, the motor control part can control the first motor control part and the second motor control part to operate independently.

The motor control part operates such that the first motor control part drives the first motor based on the first drive signal. Additionally, the motor control part operates such that the second motor control part drives the second motor based on the second drive signal.

The vehicle display device 800 can process a plurality of signals according to a preset criterion when the first drive signal and the second drive signal are received simultaneously.

In an embodiment, the control part 850 of the vehicle display device 800 can sequentially operate to allow the driving of one drive module is to be completed and then the other drive module to be driven based on time points at which the drive signals of the first drive module and the second drive module are received.

For example, when the first drive signal and the second drive signal are received sequentially, the vehicle display device 800 can operate to first move in a horizontal direction according to the first drive signal, and then subsequently move in a vertical direction according to the second drive signal. Here, 'subsequently' performing an operation includes initiating movement in a second direction without delay after movement in a first direction is completed, and initiating movement in the second direction after a predetermined time period (e.g., 0.5 seconds) after the completion of movement in the first direction.

In another embodiment, the control part 850 of the vehicle display device 800 can control the plurality of drive modules to be driven each based on a time point at which a drive signal is received, and when it is determined that the plurality of drive signals, that is, the first and second drive signals, are received simultaneously, the drive modules can be controlled to be driven according to a set priority order.

For example, when it is determined that the first and second drive signals are received simultaneously, the device can be driven to first perform a movement operation corresponding to a set specific direction. As a specific example, the priority of a direction of movement of the vehicle display device 800 can be set as follows: a direction of being slid out of the internal space of the frame to the outside in an initial state (1st priority), a direction of moving between the driver's seat and the passenger seat (2nd priority), and a direction of being slid into the internal space of the frame (3rd priority). In this case, when it is determined that a plurality of drive signals have been received, the drive modules can operate sequentially to match the priority of the set direction of movement.

In still another embodiment, the control part 850 of the vehicle display device 800 can control drive modules respectively corresponding to the first and second drive signals to be driven simultaneously based on a determination that the first and second drive signals have been received simultaneously.

For example, referring to FIG. 8, the motor control part can control the first motor control part and the second motor control part to be driven simultaneously based on the simultaneous reception of the first and second drive signals. In this case, for example, the vehicle display device 800 can be moved horizontally and simultaneously slid into or out of the frame 802.

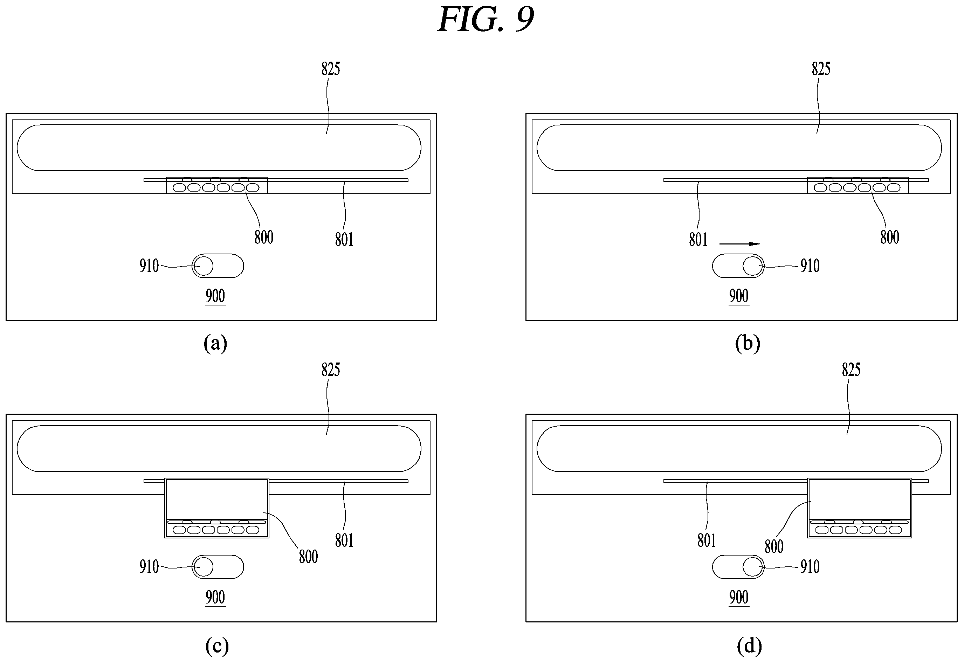

Meanwhile, FIG. 9 is exemplary drawings specifically showing a relationship between the movement of the vehicle display device 800 and the console 900.

The vehicle display device 800 and the console 900 illustrated in FIG. 9 can be spaced apart from each other in the vehicle. Specifically, the vehicle display device 800 can be located in the same frame as the display part 825 installed in a rectangular shape below a window of the vehicle's front seat. Furthermore, the console 900 can be located between the driver's seat and the passenger seat so as to be parallel to the driver's seat and the passenger seat.

The vehicle display device 800 can be operated to move in a horizontal direction along a bar-shaped slot 801 formed at a bottom of the frame and/or be slid into or out of the internal space of the frame through the slot 801.

The console 900 has a manipulation unit 910 formed to be movable and/or tiltable located in the frame. The circular manipulation unit 910 can be moved horizontally in a horizontally elongated elliptical frame and/or tilted up and down.

The movement of the vehicle display device 800 can be controlled based on a user manipulation on the manipulation unit 910 of the console 900.

Specifically, referring to (a) of FIG. 9, the vehicle display device 800 can be located to correspond to the driver's seat (or center) of the vehicle 100 based on the manipulation unit 910 of the console 900 being located on the left of the frame.

In this case, the vehicle display device 800 can be in a state of being slid into the internal space of the frame. Here, the state of being slid into the internal space of the frame includes both a state in which the display part 820 of the vehicle display device 800 is completely hidden in the internal space of the frame and a state in which a portion thereof is exposed through the slot 801.

Meanwhile, while the vehicle display device 800 is slid into the internal space of the frame, the vehicle display device 800 moves to correspond to the passenger seat of the vehicle 100 based on the manipulation unit 910 of the console 900 being moved to the right of the frame. In this case, the vehicle display device 800 moves while maintaining a state of being slid into the internal space of the frame.

In this case, while the vehicle display device 800 is in the internal space of the frame, visual information indicating a direction of movement can be displayed on a portion of the display part 820 or on a bottom of the rectangular display 825 so as to allow the vehicle display device 800 to be recognized that it is moving from the outside. Alternatively, a visual effect indicating a direction of movement of the vehicle display device 800 can be displayed through an LED installed on a frame on which the vehicle display device 800 and the rectangular display part 825 are mounted.

Subsequently, referring to (b) of FIG. 9, the vehicle display device 800 moves to a position corresponding to the passenger seat of the vehicle 100 based on the manipulation unit 910 of the console 900 being moved to the right of the frame.

To this end, a signal corresponding to the manipulation unit 910 of the console 900 being moved to the right of the frame of the console 910 is transmitted to the vehicle display device 800. Then, the vehicle display device 800 recognizes a direction of movement/tilting of the manipulation unit 910 included in the received signal to control the operation of the matching drive module. The vehicle display device 800 moves according to the operation of the drive module.

Meanwhile, although not described in detail, when the vehicle display device 800 moves to a position corresponding to the passenger seat of the vehicle 100 based on the manipulation unit 910 of the console 900 being moved to the right of the frame while being slid into the internal space of the frame as in (b) of FIG. 9, guide information for additional movement of the vehicle display device 800 can be displayed on the display part 820 of the vehicle display device 800 or the rectangular display part 825. That is, the guide information that induces additional manipulation of the console 900 can be output so as to allow the vehicle display device 800 to be exposed to the outside of the frame and used as an element to control the screen of the rectangular display part 825.

Additionally, in an embodiment, when the vehicle display device 800 moves to a position corresponding to the passenger seat of the vehicle 100 based on the manipulation unit 910 of the console 900 being moved to the right of the frame, at least a portion of a screen of the rectangular display part 825 can be switched to a screen for the passenger seat.

Subsequently, referring to (c) of FIG. 9, the vehicle display device 800 can be located to correspond to the driver's seat (or center) of the vehicle 100 based on the manipulation unit 910 of the console 900 being located on the left of the frame.

In this case, when the vehicle display device 800 is slid into the internal space of the frame, the manipulation unit 910 of the console 910 can be operated to be tilted downward so as to allow the vehicle display device 800 to be slid out of the frame through the slot 801.

Meanwhile, such an operation can also be performed as shown in (b) of FIG. 9, while the manipulation unit 910 of the console 900 is located on the right of the frame and the vehicle display device 800 is located to correspond to the passenger seat. That is, in (b) of FIG. 9, the manipulation unit 910 of the console 900 can be tilted downward so as to allow the vehicle display device 800 located to correspond to the passenger seat to be operated to be slid out of the frame through the slot 801 (d).

Subsequently, referring to (d) of FIG. 9, based on the manipulation unit 910 of the console 910 being moved to the right of the frame, the vehicle display device 800 moves to a position corresponding to the passenger seat of the vehicle 100 while being slid out of the frame.

In this case, since the direction in which the vehicle display device 800 is moving can be visually confirmed, a visual image indicating the direction of movement of the vehicle display device 800 can not be displayed.

Additionally, in an embodiment, when the vehicle display device 800 that has been slid out of the frame moves to a position corresponding to the passenger seat of the vehicle 100, at least a portion of the rectangular display part 825 can be switched to a screen for the passenger seat.

Meanwhile, in the state in (d) of FIG. 9, the manipulation unit 910 of the console 910 can be tilted upward so as to allow the vehicle display device 800 located in the passenger seat to be slid into the internal space of the frame through the slot 801 (b).

Alternatively, in the state in (d) of FIG. 9, the manipulation unit 910 of the console 910 can be moved to the left so as to allow the vehicle display device 800 located in the passenger seat to move to a position corresponding to the driver's seat (or center) while maintaining a state of being exposed.

Subsequently, when the vehicle display device 800 moves to a position corresponding to the driver's seat (or center) and then the manipulation unit 910 of the console 910 is tilted upward, the vehicle display device 800 located at the driver's seat (or center) is slid into the internal space of the frame through the slot 801.

As seen above, the vehicle display device 800 can perform an operation such as moving left and right along the slot 801, being slid out of the internal space of the frame, or being slid into the internal space of the frame based on various manipulations on the console 900.

Meanwhile, there are cases where the movement of the vehicle display device 800 is restricted due to the manipulation of the console 900. Additionally, there are cases where the movement of the vehicle display device 800 is restricted based on a drive signal generated according to a user input or a signal (e.g., vehicle start-up) other than the manipulation of the console 900. Hereinafter, embodiments in which the movement of the vehicle display device 800 is restricted will be described in detail.

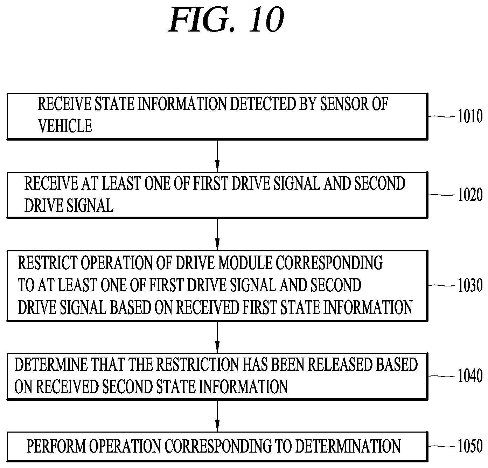

FIG. 10 is a flowchart for explaining a method of restricting a movement of the vehicle display device 100 according to an embodiment of the present disclosure. Each operation of the vehicle display device 800 illustrated in FIG. 10 can be performed through the control part 850 of the vehicle display device 800 unless otherwise described.

Referring to FIG. 10, the vehicle display device 800 can receive state information detected by a sensor of the vehicle 100 (1010). Specifically, the vehicle display device 800 can communicate with the vehicle 100 to receive state information detected by the sensor of the vehicle.

Here, the state information can be related to at least one of a state of the vehicle itself, a driving state of the vehicle, a driving situation, and a surrounding situation of the vehicle.

In an embodiment, the received state information can be related to at least one of a driving mode of the vehicle, a driving speed, a number and risk level of detected objects, a vibration level of the vehicle, and an unexpected situation around the vehicle.

Additionally, the state information can include vehicle driving information satisfying a condition in which driving restriction of the vehicle display device 800 is determined to be needed. Additionally, the state information can include vehicle driving information satisfying a condition in which driving restriction of the vehicle display device 800 is determined to be no longer needed.

Subsequently, the vehicle display device 800 can receive at least one of a first drive signal and a second drive signal that moves the display part 820 in different directions (1020).

Next, the vehicle display device 800 can restrict the operation of the drive module corresponding to the first drive signal and the second drive signal based on the received state information (1030).

To this end, the vehicle display device 800 can determine whether the operation of the drive module 830a, 830b corresponding to each vehicle drive signal is restricted based on the received state information.

Here, state information satisfying a condition in which the operation of the drive module 830a, 830b of the display device 800 is restricted can be defined as first state information.

The first state information can be information on a situation requiring driving attention of the vehicle, as a result of detecting at least one of a state of the vehicle itself, a driving state of the vehicle, a driving situation, and a surrounding situation of the vehicle.

For example, the first state information can be a result of sensing any one of a switching to a manual driving mode, an increase in number of objects detected around the vehicle, an increase in risk, an increase in vibration level of the vehicle, or an occurrence of an unexpected situation around the vehicle.

Restricting, by the vehicle display device 800, the operation of the drive modules 830a, 830b based on the first state information can refer to operating the drive module 830a, 830b to allow the display part 820 to be located in an initial state.

Specifically, the vehicle display device 800 can restrict the operation of the first drive module corresponding to the first drive signal. Here, the first drive signal is a signal that drives the first drive module so as to allow the display part 820 of the vehicle display device 800 to move in a horizontal direction of the frame. The first drive signal includes information on a direction of movement of the display part 820, for example, whether it is a direction from the driver's seat toward the passenger seat or from the passenger seat toward the driver's seat.

For example, when the first drive signal is a control signal that moves the display part 820 from the driver's seat toward the passenger seat, the vehicle display device 800 can restrict the first drive module corresponding to the first drive signal from operating. That is, the display part 820 is fixed to a position corresponding to the driver's seat.

Additionally, for example, when the first drive signal is a control signal that moves the display part 820 from the passenger seat to the driver's seat, the vehicle display device 800 can operate to allow the first drive module corresponding to the first drive signal to move the display part 820 to an initial state position.

In this case, the operation of the first drive module is not an operation based on the first drive signal, but rather an operation that restricts the display part 820 to return to the initial state position based on the received first state information.

Additionally, specifically, the vehicle display device 800 can restrict the operation of the second drive module corresponding to the second drive signal. Here, the second drive signal is a signal that drives the second drive module so as to allow at least a portion of the display part 820 of the vehicle display device 800 to be slid into an internal space of the frame or slid out to the outside. The second drive signal includes information on a direction of movement of the display part 820, for example, information on whether the display part 820 is in a direction of being slid into an internal space of the frame or being slid out to the outside.

For example, when the second drive signal is a control signal that moves the display part 820 to be slid out of the internal space of the frame, the vehicle display device 800 can restrict the second drive module corresponding to the second drive signal from operating. That is, the display part 820 maintains a state of being slid into the internal space of the frame.

Additionally, for example, when the second drive signal is a control signal that moves the display part 820 to be slid into the internal space of the frame from the outside, the vehicle display device 800 can operate to allow the second drive module corresponding to the second drive signal to move the display part 820 to an initial state position.

In this case, the operation of the second drive module is not an operation based on the second drive signal, but rather an operation that restricts the display part 820 to return to the initial state position based on the received first state information.

Meanwhile, in some embodiments, the vehicle display device 800 can output visual information and/or sound indicating a movement restriction based on the movement restriction determined based on the first state information.

Subsequently, the vehicle display device 800 can determine that the operation restriction of the drive module 830a, 830b of the vehicle display device 800 has been released based on the received state information (1040). Then, the vehicle display device 800 performs an operation corresponding to the determination (1050).

Here, the state information satisfying a condition in which the operation restriction of the drive module 830a, 830b of the display device 800 is released can be defined as a second state information different from the first state information.

The second state information can be information on a situation in which the driving attention of the vehicle is relieved, as a result of detecting at least one of a state of the vehicle itself, a driving state of the vehicle, a driving situation, and a surrounding situation of the vehicle.

For example, the second state information can be a result of sensing any one of a switching to an automatic driving mode, a decrease or absence of a number of objects detected around the vehicle, a decrease in risk, a decrease in vibration level of the vehicle, or a release of an unexpected situation around the vehicle.

Releasing, by the vehicle display device 800, the operation restriction of the drive module 830a, 830b based on the second state information refers to now operating, by the display part 820, the drive modules 830a, 830b to move according to the first drive signal and the second drive signal.

Specifically, the display part 820 of the vehicle display device 800 can move between the driver's seat (center) and the passenger seat of the vehicle based on the first drive signal. Additionally, the display part 820 of the vehicle display device 800 can be moved to be slid into or out of the internal space through the slot 801 of the frame based on the second drive signal.

Meanwhile, in some embodiments, the vehicle display device 800 can output visual information and/or sound indicating a release of movement restriction based on the movement restriction released based on the second state information.

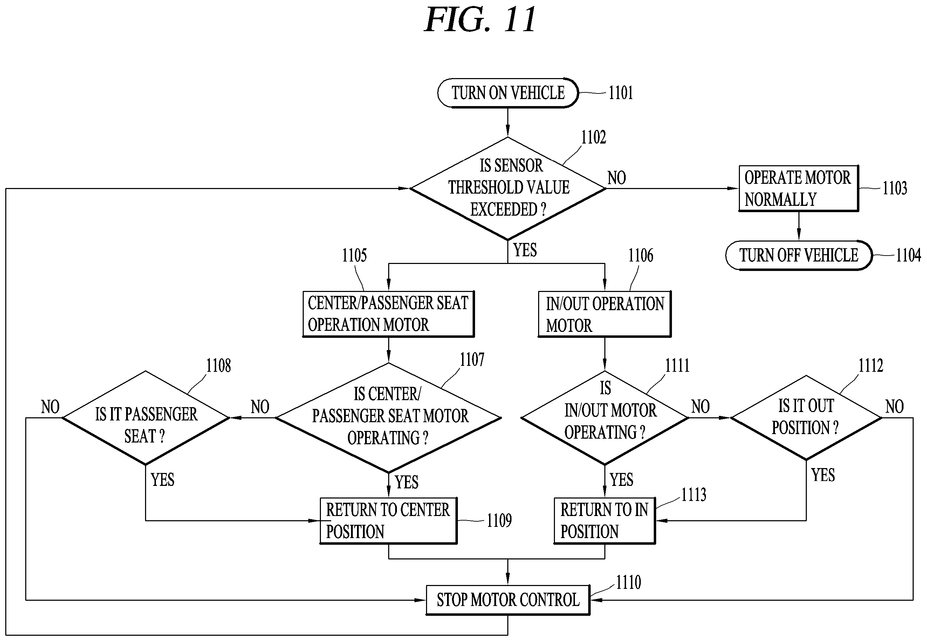

FIG. 11 is a flowchart for explaining an operation method of a vehicle display device according to the movement restriction described in FIG. 10.

The flowchart of FIG. 11 illustrates a method of controlling and restricting, by the vehicle display device 800, the movement of the display part 820 based on the state information of the vehicle. Specifically, the flowchart of FIG. 10 illustrates a method of receiving, when a drive signal for moving the display part 820 in different directions is generated, the state information of the vehicle to restrict an operation according to the drive signal.

However, the flowchart of FIG. 11 illustrates a method of moving the display part 820 and restricting the movement thereof according to the state information of the vehicle, including when a drive signal for moving the display part 820 in different directions is not generated.

Each process of the flowchart in Fig. 11 is assumed to be performed by the control part 850 of the vehicle display device 800 unless otherwise described.

First, after starting the vehicle (1101), the vehicle display device 800 can recognize whether a sensing value exceeding a threshold value is detected from a sensor provided in the vehicle 800 (1102).

When it is determined that a sensing value of the vehicle sensor exceeds a threshold value and operation restriction is required for the vehicle display device 800, operation restriction is performed on a motor 1105 of the first drive module that moves the display part 820 of the vehicle display device 800 in a horizontal direction and a motor 1106 of the second drive module that moves the display part 820 into/out of the frame.

In other words, the vehicle display device 800 restricts the operation of the motor 1105 of the first drive module and the motor 1106 of the second drive module, respectively.

The motor 1105 of the first drive module provides the first drive module with a driving force to move the display part 820 between the center of the vehicle's front seat and the passenger seat.

When it is detected that the motor 1105 of the first drive module is in operation (1107), the motor 1105 of the first drive module is controlled such that the display part 820 returns to the center position (1109). That is, the operation of the first drive module is restricted such that the display part 820 returns to an initial state position regardless of a direction of movement included in the drive signal. Then, the control of the motor 1105 of the first drive module is stopped (1110) such that the display part 820 maintains the center position.

Meanwhile, when the motor 1105 of the first drive module is not in operation, it is determined whether a current position of the display part 820 corresponds to a position of the passenger seat (1108).

When the current position of the display part 820 is a position corresponding to the passenger seat, the motor 1105 of the first drive module is controlled to return to the center position (1109). That is, the first drive module is operated such that the display part 820 returns to its initial state position even though no drive signal is generated according to the input.

When the current position of the display part 820 is the center position, the control of the motor 1105 of the first drive module is stopped (1110). Accordingly, the display part 820 maintains the center position.

Meanwhile, the motor 1106 of the second drive module provides a driving force to the second drive module to slide the display part 820 into or out of the internal space of the frame.

When it is detected that the motor 1106 of the second drive module is in operation (1111), the motor 1106 of the second drive module is controlled such that the display part 820 returns to a state of being slid into the internal space of the frame (1113). That is, the operation of the second drive module is restricted such that the display part 820 returns to the initial state position regardless of the direction of movement included in the drive signal. Then, the control of the motor 1106 of the second drive module is stopped (1110) such that the display part 820 maintains an initial state of being slid into the internal space of the frame.

Meanwhile, when the motor 1106 of the second drive module is not in operation, it is determined whether the position of the display part 820 is exposed to the outside (1112).

When the current position of the display part 820 is exposed to the outside, the motor 1106 of the second drive module is controlled to return to a state of being slid into the internal space of the frame (1113). That is, the second drive module is operated such that the display part 820 returns to its initial state position even though no drive signal is generated according to the input.

When the current position of the display part 820 is located in the initial state of being slid into the internal space of the frame, the control of the motor 1106 of the second drive module is stopped (1110). Accordingly, the display part 820 is maintained in a state of being slid into the frame.

Meanwhile, while the sensing value of the vehicle sensor is below the threshold value, the motor 1105 of the first drive module and the motor 1106 of the second drive module operate normally according to the generated drive signal (1103). This continues until the vehicle's engine is turned off (1104).

As described above with reference to FIGS. 10 and 11, the vehicle display device 800 according to an embodiment of the present disclosure restricts movement to return to an initial state when driving attention is required depending on a state of the vehicle itself, a driving state, and a surrounding situation, thereby providing convenience to the occupant without interfering with driving.

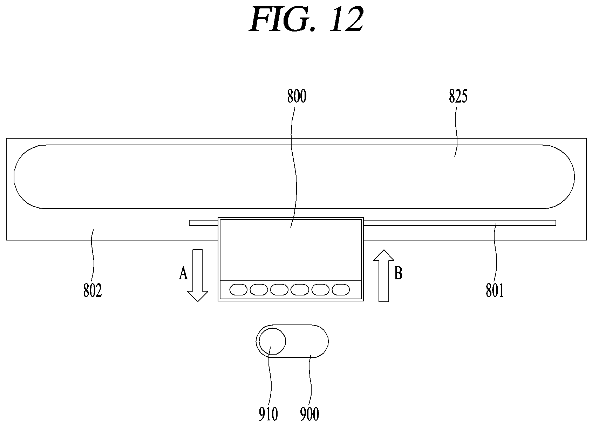

FIG. 12 is a drawing showing an example of an operation according to a movement restriction and a release of the restriction of the vehicle display device 800 according to an embodiment of the present disclosure.

Referring to FIG. 12, the vehicle display device 800 can receive a signal for movement restriction from the vehicle 100, and control the vehicle display device 100 to be located in an initial state based on the received restriction signal.

Specifically, when the vehicle display device 800 is located in the passenger seat, it can be operated to move along the slot 801 of the frame 802 to a position corresponding to the driver's seat (or center). Subsequently or in addition thereto, the vehicle display device 800 can be operated to move in direction B through the slot 801 so as to be slid into an internal space of the frame 802.

In this case, even if movement/tilting is applied to the manipulation unit 910 of the console 900, a drive signal corresponding thereto is not generated. Additionally, in some embodiments, the manipulation unit 910 of the console 900 can move to match the foregoing operation according to the movement restriction of the vehicle display device 800. For example, when the vehicle display device 800 moves from the driver's seat (or center) to the passenger seat according to the movement restriction, the manipulation unit 910 of the console 900 located on the right can also move to the left of the frame.

Subsequently, referring to FIG. 12, the vehicle display device 800 can receive a signal for releasing the movement restriction from the vehicle 100, and control the vehicle display device 100 to move based on a manipulation of the console 900 on the basis of the received release signal.

Specifically, based on the release of the movement restriction, the vehicle display device 800 can be operated to move in direction A through the slot 801 so as to be slid out of the internal space of the frame 802. Then, the vehicle display device 800 can be controlled to move based on a signal generated according to the movement/tilting of the manipulation unit 910 of the console 900.

Meanwhile, in some embodiments, prior to performing movement restriction on the vehicle display device 800, the vehicle display device 800 can be operated to move in a manner that matches a manipulation applied to the manipulation unit 910 of the console 900.

For example, it is assumed that the console 900 and the manipulation unit 910 has moved from the left to the right in the frame, but the movement of the vehicle display device 800 is restricted, and thus a horizontal movement of the vehicle display device 800 is restricted. In this case, when the movement restriction of the vehicle display device 800 is released, the vehicle display device 800 can be moved from the driver's seat (or center) to the passenger seat without additionally manipulating the manipulation unit 910 of the console 900.

Subsequently, the vehicle display device 800 can output an indication indicating that it is moving to the display part 820 while moving based on a drive signal or movement restriction.

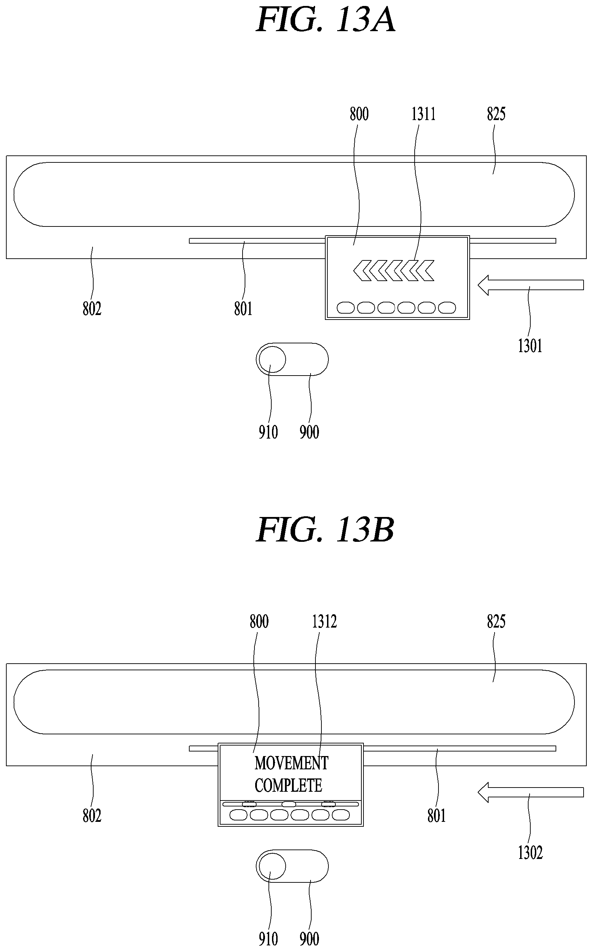

FIG. 13A is a drawing showing an example of a movement indication method according to the movement of the vehicle display device 800.

In an embodiment, the control part 850 of the vehicle display device 800 can display visual information indicating a current direction of movement on the display part 820 to display the direction of movement to the outside while the display part 820 moves in different directions according to each drive signal.

Here, the current direction of movement includes both a state in which the display part 820 is prepared for movement and a time period during which movement is performed based on the drive signal. Additionally, here, the visual information refers to text, images, and symbols that allow one to intuitively perceive the current direction of movement.

For example, referring to FIG. 13A, as the manipulation unit 910 of the console 900 moves from the right of the frame to the left, a drive signal is generated to move the vehicle display device 800 from the passenger seat to the driver's seat (or center). Then, while the vehicle display device 800 moves in a direction 1301 corresponding to the generated drive signal, an arrow image 1311 matching the direction 1301 can be continuously displayed on a display of the vehicle display device 800.

Additionally, the vehicle display device 800 can output, when there is a request for movement in the same direction after the completion of movement based on the drive signal, an indication indicating that the movement has been completed to the display part 820.

FIG. 13B is a drawing showing an example of an indication method according to the completion of movement of the vehicle display device 800.

In an embodiment, the control part 850 of the vehicle display device 800 can display, when the movement of the display part 820 is completed in a matching direction according to each drive signal, visual information indicating that the movement has been completed to the outside on the display part 820.

Here, the case where the movement is completed refers to that the vehicle display device 800 has performed all the movement by a movement distance matching a degree of tilting applied to the manipulation unit 910 of the console 900. Therefore, the completion of the movement does not necessarily refer to only when the vehicle display device 800 is located to a set threshold point.

For example, referring to FIG. 13B, when the vehicle display device 800 moves from the passenger seat to the driver's seat (or center) as the manipulation unit 910 of the console 900 moves from the right of the frame to the left (1302), text 1312 such as "movement complete" can be displayed on the display of the vehicle display device 800.

Meanwhile, in an embodiment, while the vehicle display device 800 capable of moving in different directions is located at a threshold point in a specific direction, there can be a request for additional movement in the same direction.

In this case, the vehicle display device 800 can recognize a current position of the vehicle display device 800 through a sensor in conjunction with each drive module 830a, 830b, and display, when the recognized current position is a threshold point and there is a request for additional movement in the same direction, to the outside through the display part 820 that it can no longer move in that direction.

To this end, the control part 850 of the vehicle display device 800 can detect, through a first sensor, when the display part 820 is in an initial position based on the operation of the first drive module 830a, and now restrict an operation corresponding to the drive signal moving from the passenger seat toward the driver's seat.

Similarly, the control part 850 of the vehicle display device 800 can detect when the display part 820 moves toward the passenger seat and then is located at a threshold position through the first sensor, and now restrict an operation corresponding to the drive signal for moving from the driver's seat toward the passenger seat.

The operation restriction can also be applied in the same way through the second drive module 830b and a second sensor of the vehicle display device 800.

According to the execution of the aforementioned movement restriction, visual information guiding the restriction of the direction of movement, such as text like "cannot move any further," can be displayed on the display part 820 of the vehicle display device 800.

Meanwhile, as another example, the control part 850 of the vehicle display device 800 can display visual information on the display part 820 that guides an unrestricted direction of movement, that is, a possible direction of driving, depending on the execution of the aforementioned or operation restriction.

As described above, according to a vehicle display device in accordance with the present disclosure and an operating method thereof, a display capable of controlling a large screen of an HDU can be implemented to move between a position corresponding to a driver's seat and a passenger seat, thereby selectively controlling the large screen with a simple and intuitive manipulation without changing the posture of a driver and an occupant in the passenger seat of a vehicle. In addition, a movable display can be located in a line of sight of a driver and an occupant in a passenger seat, and a console for controlling the movement of the movable display can be located such that it is convenient for the driver and the occupant to manipulate it by hand, thereby more conveniently performing various movement manipulations of the display. Furthermore, when careful driving of a vehicle is required, if a display reaches a threshold position in a specific direction, the device is implemented to recognize it and restrict movement, thereby providing safety in driving and stability in movement operation. Additionally, when the use of the movable display is not required, the interior design of the vehicle becomes simpler and more luxurious by operating it to be hidden thereinside.

The foregoing present disclosure can be implemented as codes readable by a computer on a medium written by the program. The computer-readable media includes any type of recording apparatus in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage apparatus and the like, and also include an apparatus implemented in the form of a carrier wave (e.g., transmission over the Internet). In addition, the computer can also include a controller/processor of the vehicle display device 800. Therefore, the detailed description should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

## Claims

1. A vehicle display device, the device comprising:
a display part connected to one side of a frame formed to correspond to a driver's seat and a passenger seat in a vehicle, and configured to perform screen control on a rectangular display installed in the frame;
a plurality of drive parts coupled to the display part, the plurality of drive parts comprising a first drive module configured to move the display part in a horizontal direction of the frame, and a second drive module configured to allow at least a portion of the display part to be slid into or out of an internal space of the frame; and
a control part that controls the plurality of drive parts by generating at least one of a first drive signal for operating the first drive module and a second drive signal for operating the second drive module.

2. The device of claim 1, wherein the first and second drive signals are generated by one of a touch input, button input, gesture input, or voice command corresponding thereto.

3. The device of claim 1, further comprising:
a communication part that communicates with a console controlling the driving of the display part to receive a signal according to a manipulation of the console,
wherein the control part generates the first drive signal based on a first signal according to a first manipulation of the console, and generates the second drive signal based on a second signal according to a second manipulation of the console.

4. The device of claim 3, wherein each of the first signal and the second signal includes direction information corresponding to a tilting direction of each manipulation on the console, and
wherein the control part determines a driving direction of a drive module corresponding to the first drive signal or the second drive signal based on direction information included in a signal received from the console.

5. The device of claim 4, wherein the control part generates a first drive signal to allow the display part to operate in a driving direction from the driver's seat toward the passenger seat based on direction information corresponding to a first tilting direction included in the first signal, and generates a first drive signal to allow the display part to operate in a driving direction from the passenger seat toward the driver's seat based on direction information corresponding to a second tilting direction included in the first signal.

6. The device of claim 5, wherein the control part generates a second drive signal to allow the second drive module to operate in a direction in which the display part is exposed out of the frame based on direction information corresponding to a third tilting direction included in the second signal, and generates a second drive signal to allow the second drive module to operate in a direction in which the display part is slid into an internal space of the frame based on direction information corresponding to a fourth tilting direction included in the second signal.

7. The device of claim 3, wherein each of the first signal and the second signal comprises distance information corresponding to a degree of tilting of each manipulation on the console, and
wherein the control part determines a driving distance of a drive module corresponding to the first drive signal or the second drive signal based on distance information included in a signal received from the console.

8. The device of claim 7, wherein the control part generates a first drive signal that operates the display part to move by a first distance in a horizontal direction based on distance information corresponding to a degree of first tilting included in the first signal, and generates a first drive signal that operates the display part to move by a second distance different from the first distance in a horizontal direction based on distance information corresponding to a degree of second tilting included in the first signal.

9. The device of claim 8, wherein the control part generates a second drive signal that operates the display part to be slid into or out of an internal space of the frame by a first size based on distance information corresponding to a degree of first tilting included in the second signal, and generates a second drive signal that operates the display part to be slid into or out of an internal space of the frame by a second size different from the first size based on distance information corresponding to a degree of second tilting included in the second signal.

10. The device of claim 3, wherein each of the first signal and the second signal comprises driving speed information corresponding to a degree of tilting of each manipulation on the console, and
wherein the control part determines a moving speed of the display part coupled to a drive module corresponding to the first drive signal or the second drive signal based on driving speed information included in a signal received from the console.

11. The device of claim 1, wherein the control part operates the first drive module and the second drive module to be sequentially driven based on a time point at which each drive signal is received so as to allow the driving of one drive module to be completed and then the other drive module to be driven.

12. The device of claim 1, wherein the control part controls the plurality of drive modules to be respectively driven based on a time point at which a drive signal is received, and controls, when it is determined that the first and second drive signals are received simultaneously, the drive modules to be driven according to a set priority order.

13. The device of claim 1, wherein the control part controls the drive modules respectively corresponding to the first and second drive signals to be driven simultaneously based on a determination that the first and second drive signals have been received simultaneously.

14. The device of claim 1, further comprising:
a receiving part that receives state information detected by a sensor of a vehicle,
wherein the control part restricts an operation of the drive module corresponding to the first drive signal or the second drive signal based on the received state information.

15. The device of claim 14, wherein the received state information relates to at least one of a driving mode of the vehicle, a driving speed, a number and risk level of detected objects, a vibration level of the vehicle, and an unexpected situation around the vehicle, and
wherein the control part determines whether to restrict an operation of the drive module corresponding to each drive signal based on the received state information.

16. The device of claim 15, wherein the control part restricts the operation of the drive module, then determines that the restriction has been released based on the received state information, and performs an operation corresponding to the determination.

17. The device of claim 1, wherein the second drive module is driven to change from one of a slid-in state in which a first region of the display part is exposed and a slid-out state in which an exposed area of the display part is gradually expanded from the first region to a second region to the other thereof based on the second drive signal.
